# EUROPÄISCHE PATENTSCHRIFT

(11) **EP 3 307 550 B1**
(45) Veröffentlichungstag und Bekanntmachung des Hinweises auf die Patenterteilung: **05.02.2020**
(21) Anmeldenummer: 16727734.2
(22) Anmeldetag: 09.06.2016
(51) Int. Cl.: B42D 25/23, B42D 25/328, B42D 25/455, B42D 25/46, B42D 25/47, B32B 37/00

(54) **VERFAHREN UND VORRICHTUNG ZUM HERSTELLEN EINES SICHERHEITSELEMENTE AUFWEISENDEN MEHRLAGIGEN WERT- ODER SICHERHEITSDOKUMENTS**
METHOD AND DEVICE FOR PRODUCING A MULTILAYER VALUE OR SECURITY DOCUMENT WHICH HAS SECURITY ELEMENTS
PROCÉDÉ ET DISPOSITIF DE FABRICATION D'UN DOCUMENT DE VALEUR OU DE SÉCURITÉ MULTICOUCHE PRÉSENTANT DES ÉLÉMENTS DE SÉCURITÉ

(30) Priorität: 09.06.2015 DE 102015210522
(43) Veröffentlichungstag der Anmeldung: 18.04.2018
(73) Patentinhaber: Bundesdruckerei GmbH, 10969 Berlin (DE)
(72) Erfinder: LEOPOLD, André, 10119 Berlin (DE); GAHLBECK, Jeffry, 15517 Fürstenwalde (DE); KLÜNDER, Kathrin, 10997 Berlin (DE); MÄRTENS, Detlef, 13599 Berlin (DE)
(74) Vertreter: Patentanwälte Bressel und Partner mbB
(86) Internationale Anmeldenummer: PCT/EP2016/063140
(87) Internationale Veröffentlichungsnummer: WO 2016/198517

(56) Entgegenhaltungen:
- EP-A1- 2 730 407
- WO-A1-00/50238
- WO-A1-2010/089022
- WO-A2-2011/023346
- DE-A1- 19 962 413

## Beschreibung

### Gebiet der Erfindung:

Die vorliegende Erfindung betrifft ein Verfahren und eine Vorrichtung zum Herstellen eines mehrlagigen Wert- oder Sicherheitsdokuments, das durch zumindest eine polymere Basislage und ein darauf aufkaschiertes Sicherheitselement, beispielsweise ein Hologramm, insbesondere ein Volumenhologramm, gebildet ist.

### Stand der Technik und Hintergrund der Erfindung:

Wert- oder Sicherheitsdokumente dienen dazu, die Identität einer Person, beispielsweise beim Übertritt einer Landesgrenze, oder die Identität oder Sache oder einen Anspruch, beispielsweise auf Zahlung eines Geldbetrages oder auf Herausgabe eines Produktes oder Erbringung einer Dienstleistung, zu verifizieren. Hierzu ist sicherzustellen, dass das Produkt nicht oder nur mit erheblichem Aufwand imitiert, gefälscht oder verfälscht werden kann. Das Dokument enthält daher Sicherheitsmerkmale, deren Nachahmung äußerst schwierig oder sogar praktisch unmöglich ist. Beispielsweise besteht das Dokument, wie Banknoten, aus einem nicht ohne weiteres verfügbaren Material. Zusätzlich oder alternativ können Sicherheitsmerkmale durch spezielle Farben, beispielsweise lumineszierende oder optisch variable Farben, optische Elemente, wie Hologramme, Kippbilder, kinegraphische Objekte, Linsen- oder Prismenarrays, ferner Guillochen, Melierfasern, Sicherheitsfäden und andere, gebildet sein. Des Weiteren ist es auch erforderlich, dass die Wert- oder Sicherheitsdokumente einfach herstellbar sind.

Beispielsweise können optische Sicherheitsmerkmale in Form von Sicherheitselementen separat hergestellt und dann als Patches, Lagen, Sicherheitsfäden, Sicherheitsstreifen oder dergleichen auf eine außenliegende Oberfläche auf dem Wert- oder Sicherheitsdokument oder auf eine innenliegende Oberfläche in dem Wert- oder Sicherheitsdokument aufgeklebt werden. Derartige Sicherheitselemente können optisch variable Elemente sein, sodass damit erzeugte visuell wahrnehmbare Erscheinungen je nach dem Winkel, unter dem das Wert- oder Sicherheitsdokument betrachtet wird, entweder erkennbar sind und/oder unterschiedliche Gestalt annehmen können. Beispielsweise ergibt sich aus DE 10 2009 007 552 A1, dass Wert- oder Sicherheitsdokumente beispielsweise mit einem auf holographischem, insbesondere volumenholographischem, Wege hergestellten Sicherheitsmerkmal versehen sein können.

DE 10 2009 007 552 A1 offenbart ein Verfahren zur Herstellung von mehrlagigen Sicherheitsprodukten, die zumindest aus einer Karte und zumindest einem auf zumindest einer Seite der Karte aufgebrachten Polymerfolie bestehen, wobei die Polymerfolie als Rollenware bereitgestellt wird und mit mindestens einem Sicherheitsmerkmal versehen ist. Hierzu werden eine Rollenbahn der Polymerfolie und zumindest ein Streifen mit einer n-fachen Anzahl an Nutzen einer Kaschierstation zugeführt und kaschiert. Vor dem Kaschieren werden auf der Polymerfolie eine Steuerlinie, die dem zumindest einen auf dem jeweiligen Nutzen aufzubringenden Sicherheitsmerkmal zugeordnet ist, oder eine dem Nutzen oder dem Streifen zugeordnete Steuerlinie und/oder die Referenzmarke abgefragt. Eine Zuführgeschwindigkeit und/oder eine Zuführrichtung werden von der Rollenbahn der Polymerfolie und dem Streifen zur exakten Ausrichtung zueinander angepasst. Die Rollenbahn der Polymerfolie kann individualisiert sein und beispielsweise Hologramme enthalten.

DE 10 2012 220 706 A1 gibt ein Verfahren zur Herstellung eines mehrlagigen Sicherheitsproduktes mit einer Inlay-Lage mit aktiven oder passiven elektrischen oder elektronischen Bauelementen auf einer Trägerlage an. Da die elektrischen oder elektronischen Bauelemente in Relation zu den weiteren Lagen des Sicherheitsproduktes erhebliche Kosten verursachen, würden diese erheblichen Kosten bei der Herstellung eines Sicherheitsproduktes mit Ausschuss bildenden weiteren Lagen unnötiger Weise anfallen. Daher wird ein Verfahren mit folgenden Verfahrensschritten vorgesehen: Bereitstellen mindestens einer Trägerlage oder eines die Trägerlage beinhaltenden Lagenverbundes, Bereitstellen einer Inlay-Lage oder eines die Inlay-Lage beinhaltenden Lagenverbundes, Überprüfen einer Produktionsqualität der Trägerlage und Aufbringen der Inlay-Lage oder des die Inlay-Lage beinhaltenden Lagenverbundes auf die Trägerlage ausschließlich dann, falls mindestens ein vorbestimmtes Qualitätskriterium erfüllt ist. Die Trägerlage kann eine eine individualisierte Laminationslage beinhaltende Lage beinhalten, wobei die Laminationslage beispielsweise ein Hologramm aufweisen kann. Die Inlay-Lagen und gegebenenfalls weitere Lagen, die individualisiert sind, können als Rollenware vorliegen und werden einzeln auf die Trägerlage aufgebracht.

Beispielsweise für die Herstellung von Identitätsdokumenten, die beispielsweise individualisierende Hologramme oder andere optische Beugungselemente aufweisen, werden die optischen Beugungselemente demnach zunächst in Form von Rollenware bereitgestellt, wobei eine Rolle eine Vielzahl von optischen Beugungselementen enthält. Nach Fertigstellung aller optischen Beugungselemente einer Rolle werden diese mit den ihnen zugeordneten Rohlingen der Identitätsdokumente verbunden. Da diese Vielzahl von optischen Beugungselementen, die sich auf einer derartigen Rolle befinden und die ein Fertigungslos definieren, erst dann weiterverarbeitet werden können, wenn alle optischen Beugungselemente dieser Rolle fertiggestellt sind, ergibt sich eine erhebliche Verzögerung im Ablauf zumindest für diejenigen optischen Beugungselemente auf der Rolle, die zuerst hergestellt worden sind. Von daher besteht das Problem, dass die für die Produktion eines Wert- oder Sicherheitsdokuments benötigte Zeit wesentlich auch durch den Zeitraum bestimmt wird, der zur Herstellung aller Sicherheitselemente auf dem Bahnmaterial einer Rolle von Sicherheitselementen benötigt wird.

EP 2 730 407 A1 offenbart en Verfahren zur Herstellung eines mehrlagigen Sicherheitsproduktes, umfassend die Verfahrensschritte
- Erzeugen von Auftragsdaten zur Herstellung einer ersten individualisierten Laminationslage,
- Erzeugen von Auftragsdaten zur Herstellung mindestens einer weiteren individualisierten Laminationslage,
- Bereitstellen der ersten individualisierten Laminationslage,
- Bereitstellen der mindestens einen weiteren individualisierten Laminationslage, wobei das Erzeugen der Auftragsdaten und/oder das Bereitstellen der ersten und der mindestens einen weiteren individualisierten Laminationslage zumindest teilweise zeitlich parallel erfolgt,
- Aufbringen der ersten individualisierten Laminationslage auf einen Trägerkörper,
- Aufbringen der mindestens einen weiteren individualisierten Laminationslage auf den Trägerkörper,
- Lamination des aus mindestens dem Trägerkörper, der ersten individualisierten Laminationslage und der weiteren individualisierten Laminationslage bestehenden Lagenverbundes.

### Der Erfindung zugrunde liegende Aufgaben:

Von daher liegt der vorliegenden Erfindung die Aufgabe zugrunde, die Probleme der bekannten Verfahren zu lösen und insbesondere zu ermöglichen, dass Sicherheitselemente, die vorzugsweise individualisierend, besonders bevorzugt personalisierend, sind, so eingesetzt werden, dass sich die für die Herstellung aller Sicherheitselemente auf einer Bahnmaterialrolle benötigte Zeitspanne nicht in wesentlichem Umfange auf die Produktionszeit für die Wert- oder Sicherheitsdokumente auswirkt. Es soll also das sich mit den bekannten Verfahren stellende Problem gelöst werden, dass die sich auf einer Bahnmaterialrolle befindenden Sicherheitselemente erst dann auf die ihnen zugeordneten Basislagen aufkaschiert werden können, wenn die gesamte Rolle fertiggestellt ist. Eine weitere der vorliegenden Erfindung zugrunde liegende Aufgabe besteht darin zu gewährleisten, dass die Wert- oder Sicherheitsdokumente mit einfachen Mitteln und ohne nennenswerten Ausschuss produzierbar sind.

### Definitionen der Begriffe gemäß der vorliegenden Erfindung:

Soweit in der Beschreibung und in den Ansprüchen der vorliegenden Anmeldung der Begriff ,Wert- oder Sicherheitsdokument' verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, Jeton oder ein anderes Dokument zu verstehen. Das Wert- oder Sicherheitsdokument kann beispielsweise auch eine Smartcard sein. Das Wert- oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- oder Sicherheitsdokument ist im Allgemeinen ein Laminat aus mehreren Dokumentenlagen, die passergenau unter Wärmeeinwirkung und unter erhöhtem Druck flächig miteinander verbunden sind. Diese Dokumente sollen den normierten Anforderungen genügen, beispielsweise gemäß ISO 10373, ISO/IEC 7810, ISO 14443 in der jeweiligen zum Anmeldetag dieser Anmeldung gültigen Versionsfassung. Die Dokumentenlagen bestehen beispielsweise aus einem Trägermaterial, das sich für eine Lamination eignet.

Das Wert- oder Sicherheitsdokument kann aus einem oder mehreren Polymeren gebildet sein, die ausgewählt sind aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, oder Papier oder Pappe oder Glas oder Metall oder Keramik. Außerdem kann das Dokument auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Bevorzugt wird das Dokument aus 3 bis 12, vorzugsweise 4 bis 10, Folien hergestellt. Die Folien können ferner Druckschichten tragen. Jedenfalls weist das Wert- oder Sicherheitsdokument gemäß der vorliegenden Erfindung mindestens ein individualisierendes Sicherheitselement auf.

Soweit in der Beschreibung und in den Ansprüchen der vorliegenden Anmeldung die Begriffe 'individualisierend', 'individualisiert', 'personalisierend' und 'personalisiert' verwendet werden, so ist darunter zu verstehen, dass das Sicherheitselement, auf das sich der jeweilige Begriff bezieht, ein Wert- oder Sicherheitsdokument von anderen Wert- oder Sicherheitsdokumenten unterscheidet und das Wert- oder Sicherheitsdokument einer bestimmten Entität (im Falle der Begriffe 'individualisierend' oder 'individualisiert'), insbesondere einer bestimmten Person (im Falle der Begriffe 'personalisierend' oder 'personalisiert'), zuordnet. Das Wert- oder Sicherheitsdokument kann anstelle einer Person auch einem Gegenstand, wie einem Kraftfahrzeug, Verkaufsprodukt oder einem Wertpapier, zugeordnet werden. Durch die Individualisierung bzw. Personalisierung erkennt ein Dritter die eindeutige Zuordnung des Wert- oder Sicherheitsdokuments zu der Entität oder zu Gruppen von gleichartigen oder ähnlichen Entitäten.

Soweit in der Beschreibung und in den Ansprüchen der vorliegenden Anmeldung die Begriffe 'Einfachnutzen' und 'Mehrfachnutzen' verwendet werden, so sind darunter Materialabschnitte zu verstehen, die einen bzw. mehrere Nutzen der zu einem Wert- oder Sicherheitsdokument zu verarbeitenden Lagen des Dokuments aufweisen, nämlich Sicherheitselemente-Nutzen aufweisende Sicherheitsmaterial-Nutzen, die vorzugsweise individualisierend sind, einerseits oder polymere Basismaterial-Nutzen andererseits. Das Flächenformat der Einfach- oder Mehrfachnutzen ist vorzugsweise größer als das der Sicherheitselemente-Nutzen bzw. polymeren Basislagen-Nutzen, die sich in den Sicherheitsmaterial- bzw. polymeren Basismaterial-Nutzen befinden, obwohl es grundsätzlich auch möglich wäre, deren Flächenformat gleich groß vorzusehen. Im Falle von Mehrfachnutzen befinden sich die einzelnen Sicherheitselemente-Nutzen bzw. polymeren Basislagen-Nutzen daher vorzugsweise zueinander beabstandet in den Nutzen und sind besonders bevorzugt in jeweils gleichem Abstand zueinander und exakt hintereinander (zueinander fluchtend) in dem Nutzen angeordnet. Ferner weisen die Nutzen daher auch seitlich Randmaterial, der nicht dem Dokumentenlagenmaterial bzw. Sicherheitselementmaterial zuzuordnen ist, sowie einen führenden und einen nachlaufenden Randbereich auf, der ebenfalls dem Flächenbereich der Sicherheitselemente-Nutzen bzw. polymeren Basislagen-Nutzen nicht zuzuordnen ist.

### Grundzüae der Erfindung und bevorzugte Ausführunasformen:

Die vorstehend genannten Aufgaben, die der vorliegenden Erfindung zugrunde liegen, werden gemäß einem ersten Aspekt durch ein Verfahren zum Herstellen eines mehrlagigen Wert- oder Sicherheitsdokuments gelöst, das zumindest durch eine polymere Basislage und ein darauf aufkaschiertes Sicherheitselement gebildet ist. Das Sicherheitselement ist vorzugsweise individualisierend, besonders bevorzugt personalisierend. Die polymere Basislage kann bevorzugt aus einem oder mehreren der für Wert- oder Sicherheitsdokumente verwendeten üblichen Polymere gebildet sein und in Form von Folien- oder Kartenmaterial vorliegen.

Die vorstehend genannten Aufgaben werden gemäß einem zweiten Aspekt der vorliegenden Erfindung auch durch eine Vorrichtung zum Herstellen des mehrlagigen Wert- oder Sicherheitsdokuments gelöst.

Der Erfindung liegt die Idee zugrunde, dass die Produktionszeit für ein Wert- oder Sicherheitsdokument dann wesentlich verkürzt werden kann, wenn die sich auf einer Bahnmaterialrolle befindenden Sicherheitselemente-Nutzen nicht erst dann weiterverarbeitet werden, wenn die gesamte Rolle mit allen darauf befindlichen Sicherheitselemente-Nutzen hergestellt ist. Aus dieser Idee ergab sich die Erkenntnis, dass die Sicherheitselemente-Nutzen unmittelbar nach ihrer Herstellung zur Weiterverarbeitung zur Verfügung stehen müssen. Von daher umfasst das erfindungsgemäße Verfahren die in Anspruch 1 definierten Merkmale.

Die Sicherheitsmaterial-Einfach- oder Mehrfachnutzen werden durch Vereinzeln gewonnen, und danach werden die polymeren Basismaterial-Einfach- oder Mehrfachnutzen und die so erhaltenen Sicherheitsmaterial-Einfach- oder Mehrfachnutzen gemäß Verfahrensschritt (d) zusammengeführt und passergenau aufeinander gestapelt und gemäß Verfahrensschritt (e) flächig miteinander verbunden.

Es ist vorzusehen, dass die vorstehend genannten Verfahrensschritte, Vereinzeln, Verfahrensschritt (d) und Verfahrensschritt (e), in der angegebenen Reihenfolge durchgeführt werden, wobei gegebenenfalls mindestens ein weiterer Verfahrensschritt zwischen einzelnen, mehreren oder allen jeweils aufeinander folgenden Verfahrensschrittpaaren des vorstehend genannten Ablaufes vorgesehen sein kann.

Gemäß der vorliegenden Erfindung ist es besonders bevorzugt, dass Verfahrensschritt (d) ohne Zwischenspeicherung der Sicherheitsmaterial-Einfach- oder Mehrfachnutzen nach deren Erzeugung durch Vereinzeln aus dem Bahnmaterial durchgeführt wird und nicht erst nach der Herstellung von mehr als einem Einfach- oder Mehrfachnutzen. Es ist allerdings auch möglich, zunächst eine Gruppe von mehreren, beispielsweise zwei, drei, vier, fünf, sechs, sieben, acht, neun, zehn oder noch mehr Sicherheitsmaterial-Einfach- oder Mehrfachnutzen aus dem Bahnmaterial durch Vereinzeln herzustellen, bevor die Einfach- oder Mehrfachnutzen dieser Gruppe gemäß den Verfahrensschritten (d) und (e) weiterverarbeitet werden.

Demgemäß werden die Sicherheitsmaterial-Einfach- oder Mehrfachnutzen in einer besonders bevorzugten Ausführungsform der vorliegenden Erfindung nach dem Vereinzeln aus dem im Rollenformat vorliegenden Bahnmaterial ohne Zwischenspeicherung gemäß den Verfahrensschritten (d) und (e) weiterverarbeitet. Alternativ können die Sicherheitsmaterial-Einfach- oder Mehrfachnutzen nach dem Vereinzeln aus dem im Rollenformat vorliegenden Bahnmaterial vor einer Weiterverarbeitung gemäß den Verfahrensschritten (d) und (e) aber auch zunächst zwischengespeichert werden.

Zum Zwecke einer Zwischenspeicherung der Sicherheitsmaterial-Einfach- oder Mehrfachnutzen kann vorgesehen sein, dass die Herstellvorrichtung ferner eine der Abtrenneinrichtung nachgeschaltete und der Positionierungs- und Stapelungseinrichtung vorgeschaltete Speichereinrichtung zum Aufnehmen der Sicherheitsmaterial-Einfach- oder Mehrfachnutzen aufweist.

Die erfindungsgemäße Herstellvorrichtung ist in Anspruch 9 definiert.

Die Positionierungs- und Stapelungseinrichtung ist demnach dazu ausgebildet, jeweils einen polymeren Basismaterial-Einfach- oder Mehrfachnutzen und einen mittels der Abtrenneinrichtung durch Vereinzeln gebildeten Sicherheitsmaterial-Einfach- oder Mehrfachnutzen zusammenzuführen und aufeinander zu stapeln, sodass die polymeren Basislagen-Nutzen und Sicherheitselemente-Nutzen jeweils passergenau aufeinander liegen. Ferner ist demnach auch die Kaschiereinrichtung dazu ausgebildet, den polymeren Basismaterial-Einfach- oder Mehrfachnutzen mit dem Sicherheitsmaterial-Einfach- oder Mehrfachnutzen flächig miteinander zu verbinden, die zuvor mittels der Positionierungs- und Stapelungseinrichtung zusammengeführt und passergenau aufeinander gestapelt worden sind.

Ganz besonders bevorzugt ist es, dass durch die Vereinzelung Sicherheitsmaterial-Einfachnutzen mit jeweils einem Sicherheitselemente-Nutzen von dem Bahnmaterial abgetrennt werden.

Gemäß einer bevorzugten Anwendung der vorliegenden Erfindung werden die Sicherheitselemente durch beugungsoptische Elemente, beispielsweise Hologramme, insbesondere Reflexionshologramme, kinegraphische Hologramme oder Volumenhologramme, oder ferner diffraktive Strukturen, wie beispielsweise Blazestrukturen, Lineargitter, Kreuzgitter, Hexagonalgitter, asymmetrische oder symmetrische Gitterstrukturen oder Beugungsstrukturen, ganz besonders bevorzugt Volumenhologramme, gebildet. Die Sicherheitselemente können vorzugsweise individualisierend, weiter bevorzugt personalisierend sein. In einer ganz besonders bevorzugten Weiterbildung der vorliegenden Erfindung werden die Sicherheitselemente durch individualisierende, weiter bevorzugt personalisierende, Volumenhologramme gebildet. Beispielsweise können die Sicherheitselemente durch Volumenhologramme in Form von (Gesichts-)Bildern beispielsweise der Karteninhaber gebildet sein. Das zur Erzeugung der Sicherheitselemente-Nutzen vorgesehene Bahnmaterial ist in dieser Anwendung durch ein mehrschichtiges eine Trägerlage, eine lichtempfindliche Funktionslage und eine Schutzlage aufweisendes Funktionsmaterial gebildet. Diese Lagen werden vorzugsweise durch für Wert- oder Sicherheitsdokumente vorgesehene übliche Materialien, insbesondere Polymermaterialien, gebildet und liegen besonders bevorzugt in Form von Folien vor, nämlich in Form einer Trägerfolie, einer lichtempfindlichen Funktionsfolie und einer Schutzfolie. Die Nutzen der beugungsoptischen Elemente werden in dem mehrschichtigen Funktionsmaterial durch Belichten und Prozessieren erzeugt. In diesem Falle ist die Erzeugungseinrichtung durch eine Bearbeitungseinrichtung zum Belichten und Prozessieren des mehrschichtigen Funktionsmaterials zur Bildung der Nutzen der beugungsoptischen Elemente in dem mehrschichtigen Funktionsmaterial ausgebildet.

Alternativ können die Sicherheitselemente selbstverständlich auch mit beliebigen anderen gängigen Sicherheitsmerkmalen gebildet werden, beispielsweise durch mittels Farben oder Tinten erzeugten Sicherheitsmerkmalen, einschließlich mit Sicherheitsmerkmalen, die mittels Lumineszenzfarben oder -tinten oder mittels auf Interferenz beruhenden Farben oder Tinten erzeugt sind. In diesem Falle können die Sicherheitselemente beispielsweise mit einem Druckverfahren erzeugt werden. Die Bearbeitungsvorrichtung ist in diesem Falle eine Druckvorrichtung.

Das Sicherheitselement kann in einer bevorzugten Ausführungsform der vorliegenden Erfindung genauso groß sein wie die polymere Basislage des Wert- oder Sicherheitsdokuments. Alternativ kann das Sicherheitselement die polymere Basislage auch lediglich in einem Flächenbereich bedecken, der kleiner ist als die Flächengröße der polymeren Basislage.

Mit dem erfindungsgemäßen Verfahren und der erfindungsgemäßen Vorrichtung zur Durchführung dieses Verfahrens ergibt sich für den Produktionsablauf eine wesentlich effizientere Arbeitsweise als mit bekannten Verfahren, da jeder Sicherheitselemente-Nutzen zeitnah nach dessen Herstellung auf dem diesem zugeordneten polymeren Basislagen-Nutzen appliziert wird ("Ein-Nutzen-Produktion"), sodass die Herstellung der Wert- oder Sicherheitsdokumente unabhängig von der Position des Sicherheitselemente-Nutzens auf der Rollenbahn (am Anfang, Ende oder in der Mitte) stets einen gleichbleibenden zeitlichen Aufwand erfordert. Dadurch wird insbesondere dann, wenn die Herstellung eines Wert- oder Sicherheitsdokuments oder auch nur des Sicherheitselemente-Nutzens durch Ausschuss fehlgeschlagen ist und daher eine Wiederholung von dessen Herstellung erforderlich wird, eine sehr erhebliche Verkürzung des Zeitbedarfs für den Herstellprozess erreicht. Insbesondere kann die Applikation eines fehlerhaften Sicherheitselemente-Nutzens auf einen dazugehörigen polymeren Basislagen-Nutzen unterbleiben und nach einer erneuten, diesmal korrekten Herstellung des Sicherheitselemente-Nutzens auf den hierfür vorgesehenen polymeren Basislagen-Nutzen aufgebracht werden. Da das Bahnmaterial zur Herstellung der Sicherheitselemente-Nutzen ferner im Rollenformat vorgegeben wird und in diesem Format zur Herstellung der Sicherheitselemente-Nutzen zur Verfügung steht, kann das Material auch dann problemlos verarbeitet werden, wenn die Sicherheitselemente durch beugungsoptische Elemente, wie Hologramme, gebildet sind. Denn die zum Schutz der beugungsoptischen Sicherheitsmerkmale vorhandene Schutzfolie des mehrschichtigen Funktionsmaterials wird erfindungsgemäß möglichst kurz vor der Applikation (vor dem Zusammenführen und Stapeln) des Sicherheitsmaterial-Einfach- oder Mehrfachnutzens auf den polymeren Basismaterial-Einfach- oder Mehrfachnutzen entfernt. Es ist nämlich zu berücksichtigen, dass die beugungsoptischen Sicherheitselemente wegen der submikroskopischen Größe der erzeugten Strukturen gegen Verunreinigungen und Beschädigungen äußerst empfindlich sind und daher mittels der Schutzlage geschützt werden müssen, insbesondere bei der Handhabung der Sicherheitsmaterial-Einfach- oder Mehrfachnutzen. Andererseits kann die Schutzfolie auch nicht problemlos von einem bereits vereinzelten Sicherheitsmaterial-Einfach- oder Mehrfachnutzen entfernt werden, weil sich auf den einzelnen Nutzen befindende Schutzlagenabschnitte nicht einfach gegriffen und abgezogen werden könnten. Mit dem erfindungsgemäßen Verfahren ist eine Entfernung der Schutzlagen von dem Bahnmaterial ohne weiteres möglich und zwar an einer Stelle im Produktionsablauf, der zu einem spätestmöglichen Zeitpunkt und in geringstmöglicher Entfernung vor dem Ort der Applikation auf die polymeren Basismaterial-Einfach- oder Mehrfachnutzen stattfindet.

Das Verfahren gemäß der vorliegenden Erfindung wird bevorzugt als Durchlaufverfahren ausgeführt, d.h. die zu bearbeitenden Einfach- oder Mehrfachnutzen mit den Sicherheitselemente-Nutzen und polymeren Basislagen-Nutzen werden kontinuierlich hinter- bzw. nacheinander in der erfindungsgemäßen Herstellvorrichtung bearbeitet. Typischerweise können hierzu einen kontinuierlichen Produktionsfluss ermöglichende Durchlaufmittel (Translationsaktoren), wie Transportbänder, -ketten, -walzen- oder -rollenstraßen sowie translatorisch verfahrbare Handhabungseinrichtungen, beispielsweise Saugeinrichtungen, Greifeinrichtungen und dergleichen, entlang von Transportwegen vorgesehen sein, um die Einfach- oder Mehrfachnutzen zu den einzelnen Bearbeitungsstationen zu befördern. Die zu behandelnden Materialien werden vorzugsweise überwiegend in horizontaler Richtung und waagerechter Ausrichtung durch die Herstellvorrichtung geführt. In einer bevorzugten Ausführungsform der vorliegenden Erfindung ist die Vorrichtungskomponente zur Erzeugung der Sicherheitselemente-Nutzen in und/oder auf dem Bahnmaterial mit der Vorrichtungskomponente zur Applikation der Sicherheitselemente-Nutzen auf die polymeren Basismaterial-Einfach- oder Mehrfachnutzen gekoppelt. Dies kann vorrichtungsintegriert sein, d.h. beide Komponenten sind Bestandteile einer einzigen Gesamtvorrichtung. Alternativ können diese beiden Vorrichtungen auch miteinander verkettet sein, d.h. die beiden Vorrichtungen bilden jeweils eigenständige Vorrichtungen und sind zur Übergabe der Sicherheitsmaterial-Einfach- oder Mehrfachnutzen miteinander verknüpft. Beispielsweise können die Einfach- oder Mehrfachnutzen durch Vakuumsaugeinrichtungen von einer Maschinenkomponente an die andere übergeben werden. In jedem Falle ist darauf zu achten, dass die Saugeinrichtungen ein offen liegendes empfindliches Sicherheitsmerkmal, insbesondere eine belichtete und prozessierte Funktionslage, von Sicherheitsmaterial-Einfach- oder Mehrfachnutzen nicht berühren.

Das Basismaterial für die polymeren Basislagen wird typischerweise als vorgefertigtes Laminat eingesetzt. Im Allgemeinen kann das Basismaterial bereits fast alle individualisierenden und nichtindividualisierenden Sicherheitsmerkmale des fertigen Wert- oder Sicherheitsdokuments aufweisen (mit Ausnahme des Sicherheitselemente-Nutzens). Es kann in Form von Einfach- oder Mehrfachnutzen vorliegen. Diese können insbesondere in Form von Streifen mit polymeren Basislagen-Nutzen ausgebildet sein, die hintereinander angeordnet sind. Derartige Streifen können aus größeren Bögen mit matrixförmig angeordneten polymeren Basislagen-Nutzen erzeugt werden, beispielsweise durch Stanzen. Vorzugsweise ist ein Streifen ein Mehrfachnutzen mit beispielsweise vier oder fünf polymeren Basislagen-Nutzen. Mehrere polymere Basismaterial-Einfach- oder Mehrfachnutzen können ferner miteinander verbunden sein, insbesondere mittels flexibler Verbinder, die die Nutzen in einem vorbestimmten Abstand zueinander halten. Beispielsweise können zwei polymere Basislagen-Nutzen im Format ID-3 oder vier polymere Basislagen-Nutzen im Format ID-1 einen Mehrfachnutzen bilden. Mehrfachnutzen in Form von Streifen mit einer Reihe von hintereinander angeordneten polymeren Basislagen-Nutzen enthalten die hintereinander angeordneten polymeren Basislagen-Nutzen in einer Reihe mit dazwischen liegenden gleich großen Abständen zwischen aufeinander folgenden polymeren Basislagen-Nutzen. An den führenden Rändern der Streifen kann sich beispielsweise jeweils eine nutzenfreie Fläche (Anlaufzone) befinden. An den nachlaufenden Rändern kann sich ebenfalls jeweils eine nutzenfreie Fläche (Auslaufzone) befinden. Wenn die Streifen auf ein Transportband zur Durchführung des erfindungsgemäßen Verfahrens abgelegt werden, so werden sie vorzugsweise so abgelegt, dass die polymeren Basislagen-Nutzen in dem Einfach- oder Mehrfachnutzen in der Transportrichtung hintereinander angeordnet sind, und zwar aufeinander folgend, ganz besonders bevorzugt derart, dass der Abstand des letzten polymeren Basislagen-Nutzens eines vorauslaufenden Streifens zum ersten polymeren Basislagen-Nutzen eines nachfolgenden Streifens gleich dem Abstand zwischen den polymeren Basislagen-Nutzen in dem Streifen ist.

Die polymeren Basismaterial-Einfach- oder Mehrfachnutzen können zunächst in einem Speicher (Magazin) vorgelegt sein, beispielsweise in einem Stapel, und für die Verarbeitung nacheinander mittels Handhabungseinrichtungen aus dem Magazin entnommen werden, zum Beispiel mittels Vakuumsaug- oder Greifeinrichtungen. Die erste Beschickungseinrichtung zum Bereitstellen eines polymeren Basismaterials in Form von polymeren Basismaterial-Einfach- oder Mehrfachnutzen wird beispielsweise durch den Speicher und die Handhabungseinrichtungen gebildet. Die Einfach- oder Mehrfachnutzen werden von den Handhabungseinrichtungen bevorzugt auf ein Transportband abgelegt, das beispielsweise als Vakuum-Transportband ausgebildet sein kann. Die Nutzen werden vorzugsweise in einem vorbestimmten Abstand zueinander auf dem Transportband abgelegt.

Das Bahnmaterial zur Herstellung der Sicherheitselemente wird als Rollenware vorgelegt und zur Bereitstellung des Bahnmaterials von der Rolle abgerollt. Die zur Bereitstellung der Rolle des Bahnmaterials eingesetzte Vorrichtung bildet die zweite Beschickungseinrichtung. Das Bahnmaterial kann bevorzugt aus den üblichen für Wert- oder Sicherheitsdokumente vorgesehenen Materialien, insbesondere Polymermaterialien, gebildet sein und insbesondere in Form von Folienmaterial vorliegen.

Im Falle der Herstellung von beugungsoptischen Elementen wird das Bahnmaterial in einer Bearbeitungseinrichtung zum Belichten und Prozessieren behandelt. Hierzu wird für die lichtempfindliche Funktionslage ein übliches lichtempfindliches Material, beispielsweise ein Photopolymer, eine Silberhalogenid-Beschichtung auf einem Carrier, Dichromatgelatine oder ein anderes zur Herstellung von beugungsoptischen Elementen, insbesondere für die Volumenholographie, geeignetes Material, verwendet. Die Schutzlage und die Trägerlage können aus üblichen Folienmaterialien gebildet sein, beispielsweise aus PET. Das mehrschichtige Funktionsmaterial kann beispielsweise durch einen kommerziell erhältlichen Film gebildet sein. Das Material wird in der Bearbeitungseinrichtung beispielsweise in bekannter Art und Weise zunächst holographisch belichtet. Ein hierzu einsetzbares Verfahren ist beispielsweise in EP 0 896 260 A2 beschrieben. Für diesen Verfahrensschritt wird ein Belichter eingesetzt. Anschließend wird das Funktionsmaterial prozessiert. Insbesondere wird Wärme (Strahlungsenergie im InfrarotBereich) zugeführt. Hierzu wird ein Ofen oder eine Infrarot-Strecke verwendet. Derartige Vorrichtungen sind bekannt und kommerziell erhältlich.

Gemäß einer weiteren bevorzugten Weiterbildung der vorliegenden Erfindung wird die Schutzlage des belichteten und prozessierten mehrschichtigen Funktionsmaterials nach dem Belichten und Prozessieren von der lichtempfindlichen Funktionslage abgezogen, bevor die Einfach- oder Mehrfachnutzen mit den beugungsoptischen Elemente-Nutzen (Sicherheitselemente-Nutzen) durch Vereinzeln aus dem im Rollenformat vorliegenden Bahnmaterial gebildet werden. Hierzu kann in einer weiteren bevorzugten Weiterbildung der erfindungsgemäßen Herstellvorrichtung vorgesehen sein, dass die erfindungsgemäße Herstellvorrichtung ferner eine der Bearbeitungseinrichtung zum Bearbeiten des Bahnmaterials zur Bildung von Sicherheitselemente-Nutzen nachgeschaltete und der Abtrenneinrichtung vorgeschaltete Abzieheinrichtung zum Entfernen der Schutzlage des belichteten und prozessierten mehrschichtigen Funktionsmaterials von der lichtempfindlichen Funktionslage aufweist. Die Schutzlage kann insbesondere aufgewickelt werden und eine Rolle des Schutzlagenmaterials bilden. Falls das mehrschichtige Funktionsmaterial in horizontaler Richtung und waagerechter Ausrichtung durch die Bearbeitungsvorrichtung geführt wird, ist es ganz besonders bevorzugt, es mit der Schutzlage an der Unterseite des Bahnmaterials zu führen, sodass die Schutzlage nach unten abziehbar ist. Nach dem Abziehen der Schutzlage liegt die belichtete und prozessierte Funktionslage, die die beugungsoptischen Elemente-Nutzen enthält, ungeschützt offen und wird dadurch, dass sie vorzugsweise nach unten offen liegt, besser gegen Verunreinigungen geschützt als wenn sie nach oben offen liegen würde.

Anschließend wird das Bahnmaterial in erfindungsgemäßer Art und Weise in Sicherheitsmaterial-Einfach- oder Mehrfachnutzen vereinzelt, beispielsweise durch Stanzen, Schneiden oder Perforieren und Reißen. Die hierfür einsetzbaren Vorrichtungen sind allgemein üblich. Beispielsweise kann eine Schneidvorrichtung mit mechanischen Messereinrichtungen oder mit einem Laser für den Schneidvorgang eingesetzt werden. Alternativ kann auch eine Stanzvorrichtung eingesetzt werden. Mit dem Vereinzelungsschritt wird ein Abschnitt des Bahnmaterials abgetrennt, wobei ein Sicherheitsmaterial-Einfach- oder Mehrfachnutzen gebildet wird. Bevorzugt wird ein Einfachnutzen gebildet.

In einer weiteren bevorzugten Weiterbildung der vorliegenden Erfindung ist die Größe der Sicherheitselemente-Nutzen in Relation zur Größe der von dem Bahnmaterial abgetrennten Sicherheitsmaterial-Einfach- oder Mehrfachnutzen derart vorbestimmt, dass diese Einfach- oder Mehrfachnutzen durch Vereinzeln im Überformat erzeugt werden. Dadurch kann das Wert- oder Sicherheitsdokument nach Durchführung des erfindungsgemäßen Verfahrens beispielsweise mittels eines Stanzverfahrens mit einem sauberen Randabschluss der Sicherheitselemente mit der polymeren Basislage hergestellt werden. Dies gilt insbesondere dann, wenn das Sicherheitselement die polymere Basislage im Wert- oder Sicherheitsdokument vollflächig bedeckt. Ferner ist bei einer Anwendung zur Applikation von beugungsoptischen Elemente-Nutzen vorzugsweise vorgesehen, dass die Funktionsmaterial-(Sicherheitsmaterial-)Einfach- oder Mehrfachnutzen mit den beugungsoptischen Elemente-Nutzen an einem Rand nach dem Zusammenführen und passergenauen Stapeln aufeinander jeweils über die polymeren Basismaterial-Einfach- oder Mehrfachnutzen überstehen, damit die Trägerlage des Funktionsmaterials schließlich gegriffen und abgezogen werden kann.

In einer bevorzugten Ausführungsform der vorliegenden Erfindung werden die vereinzelten Sicherheitsmaterial-Einfach- oder Mehrfachnutzen danach ohne Zwischenspeicherung erfindungsgemäß weiterverarbeitet, d.h. diese Einfach- oder Mehrfachnutzen werden nach dem Vereinzeln ohne Wartezeit auf die entsprechenden polymeren Basismaterial-Einfach- oder Mehrfachnutzen aufgebracht. Im Falle einer fehlerhaften Herstellung werden sie aus dem Prozess ausgeschleust.

In einer alternativen Ausführungsform können die vereinzelten Sicherheitsmaterial-Einfach- oder Mehrfachnutzen dagegen zunächst in einen Zwischenspeicher (Behältnis, Magazin) überführt und von dort zu einem späteren Zeitpunkt erfindungsgemäß weiterverarbeitet werden. Hierzu können die Sicherheitsmaterial-Einfach- oder Mehrfachnutzen in dem Zwischenspeicher beispielsweise aufeinander gestapelt werden. Die Sicherheitsmaterial-Einfach- oder Mehrfachnutzen werden vorzugsweise mit der offenliegenden Funktionslage des Sicherheitselemente-Nutzens, beispielsweise der belichteten und prozessierten Funktionslage des beugungsoptischen Elemente-Nutzens, nach unten weisend in den Zwischenspeicher gestapelt, sodass sich Verunreinigungen auf der Funktionslage nicht absetzen können. Zwischen die Sicherheitsmaterial-Einfach- oder Mehrfachnutzen können Zwischenlagen eingefügt werden, beispielsweise Lagen aus einem weichen Kunststoff. Während des Ablegens der einzelnen Sicherheitsmaterial-Einfach- oder Mehrfachnutzen und der Lagen aus weichem Kunststoff kann ionisierte Luft oder ein anderes ionisiertes Gas zugeführt werden, um den Aufbau von elektrostatischen Ladungen zu verhindern. Die Sicherheitsmaterial-Einfach- oder Mehrfachnutzen werden vorzugsweise dergestalt in dem Zwischenspeicher abgelegt, dass sie seitlich vorstehen, sodass sie nach jeweiliger Abnahme einer darüber angeordneten Kunststofflage seitlich gegriffen und nach oben herausgehoben werden können. Alternativ können diese Einfach- oder Mehrfachnutzen auch mit Saugeinrichtungen (Vakuumsaugern) von oben entnommen werden, sodass ein seitliches Vorstehen nicht erforderlich ist.

Damit die Sicherheitselemente-Nutzen nach deren Herstellung und insbesondere nach dem Vereinzeln in Sicherheitsmaterial-Einfach- oder Mehrfachnutzen nicht infolge elektrostatischer Aufladung aneinander haften und gegebenenfalls beschädigt oder sogar zerstört werden, kann in einer weiteren bevorzugten Weiterbildung der vorliegenden Erfindung vorgesehen werden, dass das Bahnmaterial und/oder die durch Vereinzelung gebildeten Einfach- oder Mehrfachnutzen durch Zuführen von ionisierter Luft oder eines anderen ionisierten Gases elektrisch entladen werden. Dies ist insbesondere im Falle der Anwendung zur Herstellung von Einfach- oder Mehrfachnutzen mit beugungsoptischen Elemente-Nutzen nach dem Abziehen der Schutzlage erforderlich, da sich in diesem Falle erhebliche elektrische Überschussladungen auf den Funktionsmaterialpartnern (Schutzlage einerseits und restliches Bahnmaterial andererseits) bilden können. Von daher ist die ionisierte Luft oder das andere ionisierte Gas in den Raumbereich zu leiten, in dem die Schutzlage von dem restlichen Bahnmaterial abgezogen wird.

Insbesondere wenn das Material des noch nicht applizierten Sicherheitselemente-Nutzens gegenüber Verunreinigungen und Beschädigungen besonders empfindlich ist, kann in noch einer weiteren bevorzugten Weiterbildung der vorliegenden Erfindung vorgesehen werden, dass das Bahnmaterial nach dem Verlassen der Erzeugungseinrichtung, spätestens unmittelbar vor dem Abziehen der Schutzlage, und bis zum Applizieren der Sicherheitsmaterial-Einfach- oder Mehrfachnutzen auf die polymeren Basismaterial-Einfach- oder Mehrfachnutzen gegen die Umgebung abgeschirmt ist. Dies ist insbesondere für die Applikation von Einfach- oder Mehrfachnutzen mit den beugungsoptischen Elemente-Nutzen vorteilhaft, weil die lichtempfindliche Funktionslage nach dem Belichten und Prozessieren sowie Abziehen der Schutzlage gegen diese Beeinträchtigungen äußerst empfindlich ist. Hierzu kann die Herstellvorrichtung eine Kapselungseinrichtung zum Schützen des in der Abtrenneinrichtung und der Positionierungs- und Stapelungseinrichtung verarbeiteten Bahnmaterials mit den Sicherheitselemente-Nutzen aufweisen. Die Kapselungseinrichtung kann durch ein Gehäuse gebildet sein, das den Transportweg des Bahnmaterials und der Einfach- und Mehrfachnutzen, die aus dem Bahnmaterial vereinzelt sind, sowie gegebenenfalls den Transportweg der polymeren Basismaterial-Einfach- oder Mehrfachnutzen umschließt und gegen die Umgebungsatmosphäre abschirmt. Es kann sich um einen Reinraum handeln, d.h. dass die sich innerhalb der Kapselungseinrichtung befindende Gasatmosphäre mit Reinigungseinrichtungen (Staubpartikel-Filtereinrichtungen und dergleichen) kontinuierlich oder zumindest intermittierend gereinigt wird.

Die vereinzelten Sicherheitsmaterial-Einfach- oder Mehrfachnutzen werden dann mittels eines Manipulators mit den polymeren Basismaterial-Einfach- oder Mehrfachnutzen zusammengeführt und auf diese aufgestapelt, sodass jeweils ein polymerer Basislagen-Nutzen und ein Sicherheitselemente-Nutzen passergenau aufeinander liegen. Ein hierfür geeigneter Manipulator kann beispielsweise Vakuumsaugeinrichtungen aufweisen, die die Sicherheitsmaterial-Einfach- oder Mehrfachnutzen jeweils auf die polymeren Basismaterial-Einfach- oder Mehrfachnutzen auflegen.

In einer alternativen bevorzugten Ausführungsform kann zum Zusammenführen und passergenauen Stapeln der Sicherheitsmaterial-Einfach- oder Mehrfachnutzen und der polymeren Basismaterial-Einfach- oder Mehrfachnutzen aufeinander eine Applikationswalze verwendet werden, die das noch nicht in Einfach- oder Mehrfachnutzen vereinzelte (im Rollenformat vorliegende) Bahnmaterial für die Sicherheitselemente-Nutzen zunächst fasst, vorzugsweise an dem führenden Rand des Bahnmaterials, d.h. an dem senkrecht zur Längsrichtung des Bahnmaterials verlaufenden Rand. Danach wird jeweils ein Sicherheitsmaterial-Einfach- oder Mehrfachnutzen nach dem Fassen eines Rollenmaterialabschnittes mit der Applikationswalze von dem Bahnmaterial abgetrennt. Hierzu wird das noch nicht abgetrennte Bahnmaterial von der Applikationswalze gefasst und dann jeweils ein Sicherheitsmaterial-Einfach- oder Mehrfachnutzen durch Abtrennen eines von der Applikationswalze gefassten Bahnmaterialabschnittes von dem Bahnmaterial erzeugt. Anschließend wird der abgetrennte Sicherheitsmaterial-Einfach- oder Mehrfachnutzen mittels der Applikationswalze mit einem polymeren Basismaterial-Einfach- oder Mehrfachnutzen zusammengeführt und auf diesen passergenau gestapelt. Hierzu weist die Positionierungs- und Stapelungseinrichtung die Applikationswalze auf, die dazu ausgebildet ist, das Bahnmaterial mit den Sicherheitselemente-Nutzen zu fassen und die Sicherheitsmaterial-Einfach- oder Mehrfachnutzen nach dem Abtrennen jeweils eines Bahnmaterialabschnittes von dem Bahnmaterial mit den polymeren Basismaterial-Einfach- oder Mehrfachnutzen zusammenzuführen und auf diese passergenau zu stapeln.

Damit die Applikationswalze das Bahnmaterial fasst, kann diese als Vakuumwalze ausgebildet sein. Alternativ kann sie auch eine oder mehrere sich entlang einer Mantellinie an ihrem Umfang befindende Halteleisten aufweisen, die das Bahnmaterial an seinem Ende festklemmen und beim Zusammenführen und passergenauen Stapeln mit den polymeren Basismaterial-Einfach- oder Mehrfachnutzen wieder freigeben.

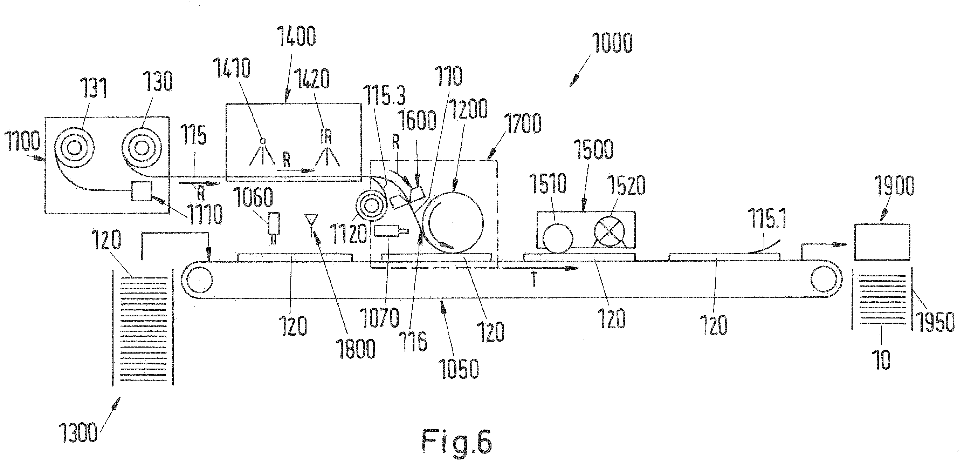

Damit die Sicherheitsmaterial-Einfach- oder Mehrfachnutzen passergenau mit den polymeren Basismaterial-Einfach- oder Mehrfachnutzen aufeinander gestapelt werden können, können die Sicherheitsmaterial-Einfach- oder Mehrfachnutzen und/oder die polymeren Basismaterial-Einfach- oder Mehrfachnutzen Referenzmarken und/oder Steuerlinien aufweisen, die den jeweiligen Einfach- oder Mehrfachnutzen zugeordnet sind und vor und/oder beim Zusammenführen und passergenauen Stapeln der Einfach- oder Mehrfachnutzen aufeinander abgefragt werden. Im Falle der Anwendung von beugungsoptischen Elementen können die Referenzmarken durch holographische Steuermarken gebildet sein. Für eine Positionierung in der Ebene, in der sich die polymeren Basismaterial-Einfach- oder Mehrfachnutzen befinden (x-y-Ebene), sind zwei Referenzmarken für die Längs- und die Querpositionierung der Sicherheitsmaterial-Einfach- oder Mehrfachnutzen erforderlich. Über die Kante des Basismaterials und/oder des Bahnmaterials und/oder gegebenenfalls dritte Referenzmarken kann auch eine Verdrehung der Basismaterial- bzw. Sicherheitsmaterial-Einfach- oder Mehrfachnutzen verhindert werden. Im Falle einer Abweichung der Position der Einfach- oder Mehrfachnutzen mit den Sicherheitselemente-Nutzen und/oder polymeren Basislagen-Nutzen von einer Sollposition werden diese durch eine entsprechende Lagekorrekturbewegung in die Sollposition überführt. Hierzu können zum Beispiel die Sicherheitsmaterial-Einfach- oder Mehrfachnutzen in einer möglichen Ausführungsform mittels mehrerer Saugeinrichtungen oder anderer Halterungen gehalten und dabei zumindest im Bereich einer oder mehrerer Referenzmarken straff gespannt werden, sodass das Material des jeweiligen Sicherheitselemente-Nutzens in diesem Bereich auch dann nicht durchhängt, wenn es flexibel ist. Diese Ausführungsform kann gewählt werden, wenn die Positionierungs- und Stapelungseinrichtung mit Saugeinrichtungen zur Handhabung der Sicherheitsmaterial-Einfach- oder Mehrfachnutzen ausgebildet ist. Im Falle einer Applikationswalze wird eine entsprechende Ausrichtung auf die Sollposition beispielsweise mittels einer Bewegung der Applikationswalze vorgenommen. Ein Beispiel hierfür ist in der Figurenbeschreibung zu Fig. 6 gegeben. Anschließend werden die polymeren Basismaterial-Einfach- oder Mehrfachnutzen beispielsweise mit den Sicherheitselemente-Nutzen durch Abgleichen der Positionen der Referenzmarken beider passergenau aufeinander zu stapelnder Einfach- oder Mehrfachnutzen in die korrekte Position überführt.

Nach dem passergenauen Stapeln der beiden Verbindungspartner aufeinander, nämlich der polymeren Basismaterial-Einfach- oder Mehrfachnutzen und der Sicherheitsmaterial-Einfach- oder Mehrfachnutzen, werden beide Verbindungspartner in einer weiteren bevorzugten Weiterbildung der vorliegenden Erfindung zunächst gegeneinander fixiert, beispielsweise mittels mechanischer Fixierelemente, die die Einfach- oder Mehrfachnutzen mit den Sicherheitselemente-Nutzen auf die polymeren Basismaterial-Einfach- oder Mehrfachnutzen aufdrücken. Die Fixierelemente können beispielsweise Klemmelemente sein. Die Fixierelemente werden bei einer Fortbewegung der passergenau aufeinander gestapelten Einfach- oder Mehrfachnutzen ebenfalls mit bewegt. Allerdings ist eine Fixierung dann nicht notwendig, wenn der Überstand der Trägerlagen gegenüber den polymeren Basismaterial-Einfach- oder Mehrfachnutzen kurz genug ist.

Schließlich werden die Sicherheitsmaterial-Einfach- oder Mehrfachnutzen mit den polymeren Basismaterial-Einfach- oder Mehrfachnutzen flächig verbunden. Hierzu dient gemäß einer weiteren bevorzugten Weiterbildung der vorliegenden Erfindung ein Haftvermittler. Der Haftvermittler kann insbesondere flüssig sein. Weiter bevorzugt kann der Haftvermittler durch ein UV-härtendes Klebemittel gebildet sein. Alternativ sind auch andere Haftvermittler einsetzbar, zum Beispiel thermisch reaktive, thermoplastische, druckempfindliche, feuchtigkeitsvernetzende Klebemittel, 2K-Systeme, oder dergleichen. Eine thermoplastische Schicht kann insbesondere auch aufgetragen werden, beispielsweise von einer Rolle. Insbesondere ist vorgesehen, dass der Haftvermittler zum Verkleben der Verbindungspartner miteinander auf die polymeren Basismaterial-Einfach- oder Mehrfachnutzen derart aufgetragen wird, dass nicht der vollständige Einfach- oder Mehrfachnutzen beschichtet wird. Wesentlich ist lediglich, dass der Haftvermittler zumindest auf den Teil des Einfach- oder Mehrfachnutzens aufgetragen wird, der von den polymeren Basislagen-Nutzen eingenommen wird. Bei der Durchführung von Verfahrensschritt (e), bei dem die aufeinander gestapelten Verbindungspartner gegeneinander gedrückt werden, breitet sich der Haftvermittler zwischen diesen aus.

Ferner weist die erfindungsgemäße Herstellvorrichtung in einer weiteren bevorzugten Weiterbildung der vorliegenden Erfindung eine der ersten Beschickungseinrichtung nachgeschaltete und der Positionierungs- und Stapelungseinrichtung vorgeschaltete Auftragseinrichtung zum Aufbringen des Haftvermittlers auf eine Oberfläche der polymeren Basismaterial-Einfach- oder Mehrfachnutzen auf. Die Auftragsvorrichtung kann beispielsweise eine Dispensereinrichtung sein, die eine definierte Menge des Haftvermittlers auf die Oberfläche der polymeren Basismaterial-Einfach- oder Mehrfachnutzen appliziert. Alternativ dazu kann die Auftragsvorrichtung auch durch eine Druckvorrichtung, beispielsweise eine Siebdruckeinrichtung, gebildet sein, wobei der Haftvermittler dazu ausgebildet ist, mit der Druckvorrichtung verdruckt werden zu können. Nochmals dazu alternativ kann die Auftragsvorrichtung auch durch eine Walzenbeschichtungseinrichtung gebildet sein.

Der Haftvermittler kann in einer alternativen Ausführungsform der vorliegenden Erfindung auch auf die Sicherheitsmaterial-Einfach- oder Mehrfachnutzen statt auf die polymeren Basismaterial-Einfach- oder Mehrfachnutzen aufgetragen werden.

Anstelle einer flächigen Klebeverbindung kann auch eine Laminierverbindung (Schweißverbindung) hergestellt werden, bei der sich die Verbindungspartner durch Erhitzen und zumindest Anschmelzen der Partnermaterialien miteinander verbinden.

Zum flächigen Verbinden (Kaschieren) der polymeren Basismaterial-Einfach- oder Mehrfachnutzen und der Sicherheitsmaterial-Einfach- oder Mehrfachnutzen wird eine Kaschiereinrichtung verwendet, in der dann, wenn ein UV-härtendes Klebemittel verwendet wird, UV-Strahlung auf das Sandwich aus den beiden Einfach- oder Mehrfachnutzen gerichtet wird, sodass der Haftvermittler aushärtet. Zu diesem Zweck werden handelsübliche UV-Strahlungsquellen verwendet. Falls ein durch Druck aktivierbarer Haftvermittler verwendet wird, wird ein gleichmäßiger flächiger Druck auf die Verbindungspartner ausgeübt. Beispielsweise wird hierzu eine Walze verwendet, die über den Stapel der Verbindungspartner abgerollt wird und dabei den flächigen Druck ausübt. Alternativ kann in diesem Falle auch ein Druckstempel eingesetzt werden. Falls ein durch Wärme härtbarer Haftvermittler eingesetzt wird, weist die Kaschiereinrichtung eine Wärmequelle, insbesondere eine Infrarot-Strahlungsquelle, auf. Die genannten Verfahren und Kaschiervorrichtungen können auch miteinander kombiniert werden.

Im Falle der Applikation von beugungsoptischen Elemente-Nutzen auf die polymeren Basislagen-Nutzen wird nach dem Aufbringen schließlich die Trägerlage von dem applizierten Einfach- oder Mehrfachnutzen mit den beugungsoptischen Elemente-Nutzen bzw. Sicherheitselemente-Nutzen abgezogen. Hierzu bildet die Trägerlage gegenüber dem polymeren Basismaterial-Einfach- oder Mehrfachnutzen einen Überstand von beispielsweise 1 bis 2 mm, sodass die Trägerfolie gegriffen und abgezogen werden kann. Dabei wird auch der Teil der Funktionslage mit abgezogen, der mit dem polymeren Basismaterial-Einfach- oder Mehrfachnutzen nicht flächig verbunden ist.

In einer weiteren bevorzugten Weiterbildung der vorliegenden Erfindung kann das Wert- oder Sicherheitsdokument nach einer abschließenden Reinigung des Sicherheitselements schließlich mit einem Schutzlack überzogen werden, sodass das Sicherheitselement gegen Beschädigung, Verunreinigung und Manipulation geschützt ist. Für die Reinigung der Sicherheitselemente kann beispielsweise ein Vakuumsaugverfahren mit einer Vakuumsaugeinrichtung und/oder ein elektrostatisches Reinigungsverfahren mit einer elektrostatischen Kleberolle eingesetzt werden.

Nach dem flächigen Verbinden der Sicherheitsmaterial-Einfach- oder Mehrfachnutzen mit den polymeren Basismaterial-Einfach- oder Mehrfachnutzen und gegebenenfalls nach dem Aufbringen eines Schutzlackes auf die Außenseiten der miteinander verbundenen Verbindungspartner werden die Wert- oder Sicherheitsdokumente aus den Einfach- oder Mehrfachnutzen randgenau durch Konturierung herausgetrennt. Hierzu kann insbesondere ein Stanzverfahren eingesetzt werden. Anstelle eines Stanzverfahrens kann auch ein anderes Konturierungsverfahren verwendet werden, beispielsweise ein Schneid- oder Fräsverfahren.

Gegebenenfalls können in das Wert- oder Sicherheitsdokument noch weitere Sicherheitsmerkmale auf- und/oder eingebracht werden.

Damit bei Verwendung von mehrlagigem Bahnmaterial zur Herstellung der Sicherheitselemente-Nutzen eine kontinuierliche Produktion ermöglicht wird, wird in einer weiteren bevorzugten Weiterbildung der vorliegenden Erfindung ein Ende einer ersten Rolle des im Rollenformat vorliegenden Bahnmaterials vor dem Erzeugen der Sicherheitselemente-Nutzen in der Erzeugungseinrichtung mit einem Ende einer zweiten Rolle des im Rollenformat vorliegenden Bahnmaterials durch Spleißen lagenweise verbunden. Dadurch wird das Bahnmaterial nämlich praktisch unlimitiert durch die Erzeugungsvorrichtung und zu der Abtrenneinrichtung geliefert, ohne dass eine Unterbrechung des Verfahrensablaufes hingenommen werden müsste. Zum Spleißen sind die Enden der ersten und der zweiten Rolle, das nachlaufende Ende der ersten Rolle und das führende Ende der zweiten Rolle, zumindest in zwei Lagen aufzutrennen. Im Falle von Funktionsmaterial zur Herstellung von beugungsoptischen Elementen sind die drei Lagen, die Trägerlage, die lichtempfindliche Funktionslage und die Schutzlage, ebenfalls zumindest in zwei Teillagen aufzutrennen, nämlich vorzugsweise in eine durch die Schutzlage gebildete erste Teillage und eine durch den Lagenverbund aus Trägerlage und lichtempfindlicher Funktionslage gebildete zweite Teillage. Die aufgetrennten Lagen beiden Rollenenden werden dann auf Stoß lagenrichtig aneinander angekettelt, indem Verbinder die jeweiligen Teillagen der beiden Rollenenden miteinander verbinden.

Zur Durchführung des Spleißvorganges weist die erfindungsgemäße Herstellvorrichtung daher ferner eine ein Ende der ersten Rolle des im Rollenformat vorliegenden Bahnmaterials mit einem Ende der zweiten Rolle des im Rollenformat vorliegenden Bahnmaterials lagenweise verbindende Spleißeinrichtung auf. Diese Spleißeinrichtung ist vorzugsweise Bestandteil der zweiten Beschickungseinrichtung. Sie kann der zweiten Beschickungsvorrichtung alternativ vorgeschaltet sein. Eine derartige Spleißeinrichtung ist beispielsweise in DE 199 62 413 A1 beschrieben.

Falls das Bahnmaterial zur Herstellung der Sicherheitselemente-Nutzen einlagig ist, kann gemäß dem erfindungsgemäßen Verfahren auch vorgesehen werden, dass ein Ende einer ersten Rolle des im Rollenformat vorliegenden Bahnmaterials vor dem Erzeugen der Sicherheitselemente-Nutzen mit einem Ende einer zweiten Rolle des im Rollenformat vorliegenden Bahnmaterials verbunden wird.

Zur näheren Erläuterung der Erfindung dienen die nachfolgend erläuterten Figuren und Beispiele, wobei diese lediglich Anschauungsbeispiele für bestimmte Ausführungsformen, nicht jedoch Beschränkungen des Umfangs der Erfindung, darstellen. Es zeigen im Einzelnen:
- Fig. 1: ein Wert- oder Sicherheitsdokument in einer schematischen isometrischen Darstellung;
- Fig. 2: ein Transportband mit mehreren darauf angeordneten Nutzen von polymeren Basislagen-Nutzen in einer schematischen Draufsicht; (A) Mehrfachnutzen (Streifen); (B) Einfachnutzen;
- Fig. 3: ein Bahnmaterial mit Sicherheitselemente-Nutzen in einer schematischen Draufsicht;
- Fig. 4: ein Sicherheitsmaterial-Einfachnutzen mit einem Sicherheitselemente-Nutzen in einer schematischen Draufsicht;
- Fig. 5: ein Funktionsmaterial zur Herstellung von volumenholographischen Sicherheitselementen in einer schematischen Querschnittsdarstellung;
- Fig. 6: eine schematische Darstellung einer erfindungsgemäßen Vorrichtung zur Herstellung von Wert- oder Sicherheitsdokumenten.

In der nachfolgenden Figurenbeschreibung bezeichnen gleiche Bezugszeichen gleiche technische Elemente oder technische Elemente mit gleicher Funktion. Soweit nachfolgend exemplarisch jeweils eine Karte genannt ist, kann darunter auch jedes andere Wert- oder Sicherheitsdokument zu verstehen sein. Gleicherweise wird anstelle des Begriffes 'polymerer Basismaterial-Einfach- oder Mehrfachnutzen' nachfolgend exemplarisch für andere derartige Nutzen der Begriff 'Kartennutzen' oder der Begriff 'Streifen' verwendet, ohne dass dies einschränkend zu verstehen sein soll. Desgleichen wird anstelle des Begriffes 'polymerer Basislagen-Nutzen' nachfolgend exemplarisch der Begriff 'Kartenformat' verwendet. Anstelle des Begriffes 'Sicherheitsmaterial-Einfach- oder Mehrfachnutzen' wird nachfolgend exemplarisch für andere derartige Nutzen der Begriff 'Hologrammnutzen' verwendet. Anstelle des Begriffes 'Sicherheitselemente-Nutzen' wird nachfolgend exemplarisch der Begriff 'Hologramm' verwendet. Die Verwendung auch dieser Begriffe ist nicht einschränkend zu verstehen.

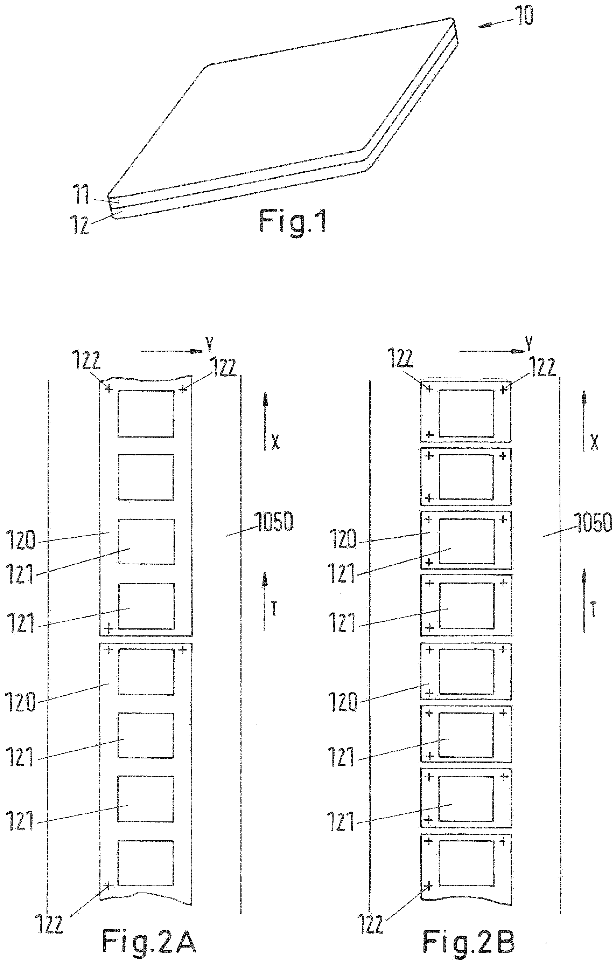

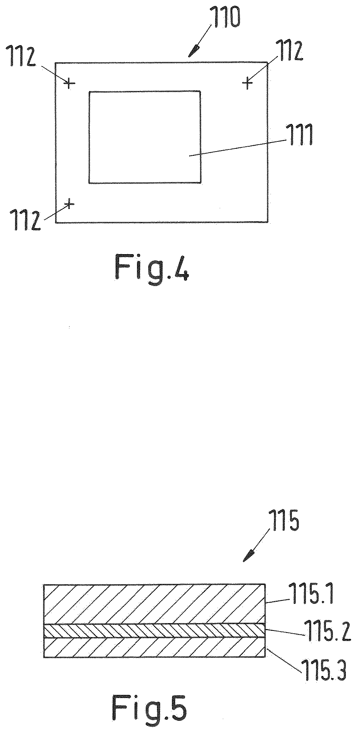

In Fig. 1 ist eine isometrische Ansicht einer Karte 10 dargestellt, welche aus zumindest einer polymeren Basislage 12 und zumindest einem auf zumindest einer Seite der polymeren Basislage aufgebrachten Sicherheitselement 11, beispielsweise einem Hologramm, gebildet ist. Zur effizienten Herstellung von Karten ist beispielsweise vorgesehen, dass eine Anzahl von mehreren Kartenformaten 121 in einem Kartennutzen 120, vorliegend einem Streifen, der einen Mehrfachnutzen darstellt, zusammengefasst wird (Fig. 2A), auf den gemäß dem in Fig. 6 dargestellten Herstellverfahren jeweils ein Hologrammnutzen 110 (Fig. 4) kaschiert wird. Eine derartige Karte kann als Personalausweis, Reisepass, Identifikationskarte, Zugangsberechtigung, Führerschein oder Personalisierungsdatenseite eines buchartigen Wert- oder Sicherheitsdokuments oder dergleichen eingesetzt werden. Das für die Karte vorgesehene Hologramm 111 kann veredelt und/oder individualisiert, insbesondere personalisiert, sein. Eine Personalisierung kann beispielsweise durch ein photographisches Gesichtsbild des Karteninhabers gebildet sein. Dieses Bild kann insbesondere durch eine holographische Belichtung erzeugt sein.

In Fig. 2A ist eine Anordnung von beispielsweise zwei Streifen (Karten-Mehrfachnutzen) 120 von Kartenformaten 121, die auf einem Transportband 1050 in der Transportrichtung T hintereinander angeordnet sind, zur nachfolgenden Kaschierung mit Hologrammen 111 dargestellt. Alternativ können die polymeren Basislagen 12 auch aus Karten-Einfachnutzen 120 bereitgestellt werden (Fig. 2B). Die Streifen oder Karten-Einfachnutzen können aus einem Bogen (nicht dargestellt), insbesondere einem Bogenlaminat, durch Ausschneiden hergestellt sein und weisen mehrere Kartenformate hintereinander in einer vorbestimmten Reihenfolge (Mehrfachnutzen) bzw. nur ein Kartenformat (Einfachnutzen) auf. Die Reihenfolge der zugeführten Hologramme 111 ergibt sich aus der Reihenfolge der parallel dazu zugeführten Kartenformate, wenn sowohl die Hologramme als auch die Kartenformate individualisiert und von daher jeweils eindeutig zueinander zugeordnet sind. Aus dem Bogenlaminat können die Einfachnutzen oder Streifen ausgeschnitten werden, wobei die Streifen vorliegend beispielsweise vier oder fünf Kartenformate umfassen. Diese Nutzen sind bevorzugt in einem vorbestimmten, insbesondere im gleichen, Abstand zueinander in einer Reihe hintereinander angeordnet und können sowohl im Längsformat als auch im Querformat hintereinander positioniert sein. Besonders bevorzugt sind die Nutzen derart zueinander angeordnet, dass die Abstände zwischen den Einfachnutzen bzw. Streifen mit den Hologrammen 111 der aufzukaschierenden Hologrammnutzen 110 in Übereinstimmung gebracht werden können.

Die einzelnen Kartenformate 121 in dem jeweiligen Karten-Einfachnutzen oder Streifen 120 können bereits individualisiert, insbesondere personalisiert, sein. Eine Personalisierung kann beispielsweise durch ein Gesichtsbild gebildet sein, das mit Hilfe eines Druckverfahrens oder einer photographischen Belichtung erzeugt wurde. Es können auch weitere Personalisierungsinformationen, wie beispielsweise Name, Dokumentennummer, Unterschrift usw. eingebracht werden. Alternativ können diese Personalisierungsschritte auch später in Teilen oder komplett, beispielsweise mit Hilfe eines Lasergravurverfahrens, vorgenommen werden. Wie erwähnt sind vorzugsweise auch die Hologramme individualisiert, vorzugsweise personalisiert, beispielsweise mit einem photographischen Gesichtsbild und/oder mit Daten des Karteninhabers versehen.

Auf dem Karten-Einfachnutzen oder Streifen 120 ist zumindest eine Referenzmarke 122 angeordnet. Bevorzugt sind drei als Passermarken ausgebildete Referenzmarken aufgebracht, um die Lage des Karten-Einfachnutzens oder Streifens zu erfassen und hinsichtlich der Transportrichtung T in X-Richtung und/oder in Y-Richtung vor dem Kaschierprozess mit den Hologrammen 111 der Hologrammnutzen 110 ausrichten zu können.

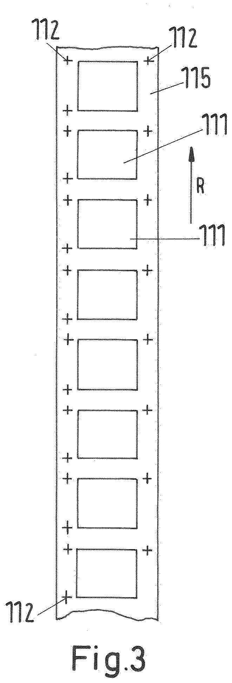

In Fig. 3 ist ein Bahnmaterial 115, das bereits in der Erzeugungseinrichtung 1400 hergestellte Hologramme 111 aufweist, in einer Ansicht von oben dargestellt. Die Hologramme sind in der Beförderungsrichtung R für das Bahnmaterial hintereinander aufgereiht, wobei bevorzugt jedem Hologramm mehrere Referenzmarken 112 zugeordnet sind. Durch eine separate Abfrage der Referenzmarken auf dem Bahnmaterial können die Hologramme auf dem Bahnmaterial jeweils zu einem Kartenformat 121 exakt positioniert werden, sodass sie passergenau zueinander angeordnet werden können. Bevorzugt ist vorgesehen, dass die Anzahl von Hologrammen in einer Gruppe von Hologrammen der Anzahl einer Gruppe der Kartenformate auf einem Streifen 120 entspricht, wobei die Hologramme und die Kartenformate jeweils denselben Abstand zueinander aufweisen. Darüber hinaus kann vorgesehen sein, dass auch der Abstand zwischen den einzelnen Gruppen der Hologramme dem Abstand zwischen den einzelnen Streifen entspricht. Entsprechendes gilt für Kartennutzen.

Die Referenzmarken 112 auf dem Bahnmaterial 115 stimmen hinsichtlich der Anordnung mit den Referenzmarken 122 auf dem Karten-Einfachnutzen oder Streifen 120 überein. Die jeweiligen Referenzmarken können zumindest vor dem Zusammenführen und passergenauen Stapeln jeweils optisch erfasst werden, wodurch es möglich ist, die aus dem Bahnmaterial vereinzelten Hologrammnutzen 110, die die Hologramme 111 aufweisen, in X-Richtung, also in der Transportrichtung T, als auch in Y-Richtung auszurichten. Eine lagerichtige Anordnung eines Hologramms 111 auf einem Kartenformat 121 ist bei Deckungsgleichheit der jeweiligen Referenzmarken gegeben.

In Fig. 4 ist ein Hologrammnutzen 110, der ein einzelnes Hologramm 111 aufweist, in einer schematischen Draufsicht wiedergegeben. Dieser Nutzen enthält Referenzmarken 112 zur Positionierung des Nutzens auf eine Sollposition.

In Fig. 5 ist ein Bahnmaterial 115 zur Herstellung eines volumenholographischen Sicherheitsmerkmals in einer schematischen Querschnittsansicht dargestellt. Das durch ein Funktionsmaterial gebildete Bahnmaterial ist dreischichtig und durch eine in der Darstellung und bei der Verarbeitung oben liegende Trägerlage 115.1, die beispielsweise durch eine PET-Trägerfolie mit einer Dicke von 50 µm gebildet ist, eine lichtempfindliche Photopolymerlage 115.2 und eine unten liegende Schutzlage 115.3 gebildet, die ebenfalls beispielsweise aus PET mit einer Dicke von 25 µm, gebildet sein kann.

In der nachfolgenden Beschreibung des Herstellungsverfahrens wird stellvertretend für Sicherheitselemente aufweisende Einfach- oder Mehrfachnutzen 110 exemplarisch das die entsprechenden Hologramm-Einfachnutzen betreffende Beispiel erläutert.

In Fig. 6 sind schematisch ein Herstellungsprozess sowie eine erfindungsgemäße Herstellvorrichtung 1000 für eine Karte 10 dargestellt. Nach Durchführung eines separaten Herstellungsprozesses für Kartennutzen 120 werden beispielsweise die einzelnen Kartennutzen, die sich in einem Magazin (Beschickungseinrichtung 1300) befinden, mittels Handhabungseinrichtungen, beispielsweise Greifeinrichtungen oder Vakuumsaugeinrichtungen (nicht dargestellt), auf das Transportband 1050 aufgelegt. Dabei wird der Abstand der einzelnen in Transportrichtung T hintereinander angeordneten Kartennutzen, beispielsweise Karten-Einfachnutzen oder Streifen, zueinander eingestellt. Das Transportband ist bevorzugt als Vakuumband ausgebildet und insbesondere als Endlosband vorgesehen. Dazu werden die Kartennutzen, die sich in definierter Reihenfolge in dem Magazin befinden, einzeln auf das Transportband abgelegt und dabei positioniert. Aus der definierten Reihenfolge der Kartennutzen ergibt sich beim nachfolgenden Zusammenführen und passergenauen Stapeln mit den Hologrammnutzen eine eindeutige Zuordnung zueinander. Sofern nämlich beide Nutzen individualisiert sind, müssen deren Individualisierungen beim Zusammenführen übereinstimmen.

Die Kartennutzen 120 werden nacheinander mittels des Transportbandes 1050 einer Beschichtungsstation 1800 zugeführt, in der ein Haftvermittler auf die Kartennutzen aufgetragen wird. Bevorzugt handelt es sich bei dem Haftvermittler um einen flüssigen Kleber, insbesondere um ein UV-vernetzendes Klebemittel. Alternativ sind auch andere Klebemittel verwendbar, zum Beispiel thermisch reaktive, thermoplastische, druckempfindliche, feuchtigkeitsvernetzende Klebemittel, 2K-Systeme, oder dergleichen. Eine thermoplastische Schicht kann insbesondere auch aufgetragen werden, beispielsweise von einer Rolle. Das flüssige Klebemittel wird beispielsweise mittels einer Dispensereinrichtung, beispielsweise mittels einer Spritze, auf die Oberfläche des Kartennutzens aufgetragen, wobei nicht die gesamte Oberfläche des Kartennutzens beschichtet werden muss. Es reicht vielmehr aus, dass lediglich die den Kartenformaten 121 entsprechenden Flächenbereiche des Kartennutzens mit dem Klebemittel beschichtet werden. Alternativ kann der Haftmittler beispielsweise auch über ein Druckverfahren strukturiert aufgetragen werden, so dass es unterschiedlich stark klebende Bereiche gibt. Alternativ können auch unterschiedliche Haftvermittler mit unterschiedlicher Klebekraft bis hin zu einem Haftvermittler-Iris-Verlauf verwendet werden. Dies steht insbesondere dem zerstörungsfreien Ablösen eines Hologramms entgegen.

Ferner werden die Positionen der Kartennutzen 120 auf dem Transportband 1050 und die Position des jeweiligen Kartenformats 121 in dem Kartennutzen mittels hierfür vorgesehener Leseeinrichtungen 1060 ermittelt, die die Positionen der Referenzmarken 122 erkennen.

Parallel zur Zuführung der Kartennutzen 120 auf das Transportband 1050 wird das Bahnmaterial 115 für die Herstellung der Hologramme 111 von einer Rolle 130, die von einer ersten Beschickungseinrichtung 1100 gehalten wird (schematisch dargestellt), zur Verfügung gestellt. Falls das Bahnmaterial auf der ersten Rolle 130 zur Neige geht, steht eine weitere (zweite) Rolle 131 des Bahnmaterials zur Verfügung, das dann anstelle des Bahnmaterials der ersten Rolle bereitgestellt wird. Damit das Herstellverfahren kontinuierlich durchgeführt werden kann, ist das Ende des Bahnmaterials der ersten Rolle in diesem Falle an das Ende des Bahnmaterials der zweiten Rolle anzukoppeln. Da das Bahnmaterial als ein mehrschichtiges Funktionsmaterial ausgebildet ist, dient zum Ankoppeln eine Spleißeinrichtung 1110. In dieser Spleißeinrichtung, die wie eine entsprechende Vorrichtung in DE 199 62 413 A1 aufgebaut ist, werden die Lagen des Funktionsmaterials beider Rollen endseitig voneinander getrennt, wobei insgesamt zwei Endteillagenbereiche gebildet werden, nämlich ein erster Endteillagenbereich, der von dem Endbereich der Schutzlage 115.3 gebildet ist, und ein zweiter Endteillagenbereich, der von einem gemeinsamen Endbereich eines Teillagenverbundes der lichtempfindlichen Funktionslage 115.2 und der Trägerlage 115.1 gebildet ist. Die ersten und die zweiten Endteillagenbereiche der Bahnmaterialien beider Rollen werden dann in der Spleißeinrichtung lagerichtig auf Stoß aneinander gekettelt, sodass das Bahnmaterial der zweiten Rolle ebenfalls in der Beförderungsrichtung R zur Erzeugungseinrichtung 1400 gefördert werden kann.

Das Bahnmaterial 115 wird von der Rolle 130, 131 zu einer Erzeugungseinrichtung 1400 zugeführt, insbesondere einer Belichtungs- und Prozessierstation. In dieser Station wird das durch ein Funktionsmaterial gebildete Bahnmaterial zur Herstellung beispielsweise eines volumenholographischen Sicherheitselements verarbeitet. Die Belichtungs- und Prozessiereinrichtung weist eine Belichtungsstation 1410 und eine Prozessierstation 1420 auf. In der Belichtungsstation wird die lichtempfindliche Funktionslage 115.2 des Funktionsmaterials belichtet, und in der Prozessierstation wird dem Material zusätzlich Wärme zugeführt. Das Verfahren und die hierfür geeigneten Materialien sind in EP 0 896 260 A2 näher beschrieben. Auf dem Bahnmaterial werden beispielsweise Volumenhologramme zusammen mit holographischen Referenzmarken 112 erzeugt, die in der in Fig. 3 gezeigten Anordnung gebildet werden. Alternativ kann die Erzeugungseinrichtung auch eine Druckeinrichtung, beispielsweise eine digitale Druckeinrichtung sein, mit der beispielsweise ein individualisierendes Druckbild mit gedruckten Referenzmarken in der in Fig. 3 gezeigten Anordnung auf das Bahnmaterial aufgedruckt wird. In Fig. 6 nicht gezeigt ist eine Sensoreinrichtung, mit der das in der Erzeugungseinrichtung erzeugte volumenholographische Sicherheitselement 11 auf dessen Fehlerfreiheit überprüft wird.

Nach Durchlaufen der Erzeugungseinrichtung 1400 wird die sich an der Unterseite des Funktionsmaterials 115 befindende Schutzfolie 115.3 abgezogen und auf eine Rolle 1120 aufgewickelt.

Der Belichtungs- und Prozessiereinrichtung 1400 in der Beförderungsrichtung R des Funktionsmaterials 115 nachgeschaltet angeordnet ist eine Abtrenneinrichtung 1600, beispielsweise eine Schneidvorrichtung, zu der das bearbeitete Funktionsmaterial anschließend gelangt. Von der Abtrenneinrichtung werden von dem Funktionsmaterial Bahnmaterialabschnitte in Form von Hologramm-Einfachnutzen 110 der in der Belichtungs- und Prozessiereinrichtung gebildeten Hologramme 111 abgetrennt, beispielsweise abgeschnitten.

Bevor diese Hologramm-Einfachnutzen 110 von dem Funktionsmaterial 115 abgetrennt werden, gelangt letzteres mit seinem führenden Rand 116 zunächst zu einer Applikationswalze 1200 (Positionierungs- und Stapelungseinrichtung), die als Vakuumwalze ausgebildet ist und auf deren Mantelfläche ein kleiner Frontabschnitt des Funktionsmaterials 115 anliegt und mittels Vakuum dort festgehalten wird. Alternativ oder zusätzlich kann die Applikationswalze auch eine Halteleiste aufweisen, mit der der führende Rand des Funktionsmaterials an der Applikationswalze festgeklemmt wird (nicht dargestellt). Nachdem die Applikationswalze das Funktionsmaterial auf diese Art und Weise fixiert hat, wird ein Hologramm-Einfachnutzen 120 von dem Funktionsmaterial abgetrennt, der daraufhin von der Applikationswalze über dessen führenden Rand gehalten wird.

Falls mit dem Sensor in der Erzeugungseinrichtung 1400 festgestellt worden ist, dass das Hologramm 111 nicht fehlerfrei ist, wird dieses aus dem Prozess ausgeschleust und verworfen. Der Kartennutzen 120, dem dieses verworfene Hologramm zugeordnet ist, wird daher zunächst auf eine Parkposition befördert (nicht dargestellt). Dies setzt allerdings voraus, dass die Kartennutzen als Einfachnutzen zur Verfügung gestellt werden, da andernfalls nicht ein einzelner Kartennutzen auf die Parkposition befördert werden kann. Während der nachfolgende Hologrammnutzen 110 in der Erzeugungseinrichtung 1400 hergestellt und mit dem zugehörigen Kartennutzen, der dem nunmehr in der Parkposition verharrenden Kartennutzen nachfolgt, zusammengeführt und mit diesem aufeinander gestapelt wird, wird das verworfene Hologramm in der Erzeugungseinrichtung nochmals hergestellt und in Form eines Hologrammnutzens ausgegeben. Wenn dieses als fehlerfrei erkannt ist, kann der sich in der Parkposition befindende Kartennutzen wieder in den Produktionsprozess eingeführt werden, sodass der erneut hergestellte Hologrammnutzen mit dem zugehörigen Kartennutzen zusammengestapelt werden kann.

Auf diese Weise können beispielsweise die in einer bekannten Reihenfolge auf dem Transportband 1050 beförderten Kartennutzen 1, 2, 3 und 4 vorgelegt werden. Wenn dann der zum Kartennutzen 2 zugehörige Hologrammnutzen 2 fehlerhaft produziert wird und daher verworfen werden muss, wird der Kartennutzen 2 in eine Parkposition ausgefahren, und lediglich die Kartennutzen 1, 3 und 4 mit den zugehörigen Hologrammnutzen 1, 3 und 4 werden zunächst zusammengeführt, gestapelt und weiterverarbeitet. Währenddessen wird der Hologrammnutzen 2 nochmals produziert und im Anschluss an die Bearbeitung der Karten- und Hologrammnutzen 1, 3 und 4 mit dem Kartennutzen 2 zusammengeführt, aufeinander gestapelt und weiterverarbeitet. Hierzu ist der Kartennutzen 2 aus der Parkposition wieder in den Produktionsprozess einzuschleusen.

Zum Zusammenführen und Aufeinanderstapeln des Hologrammnutzens 110 mit dem Kartennutzen 120 wird dann die Applikationswalze 1200 um ihre Achse gedreht, sodass der Hologrammnutzen mit bewegt wird. Da sich das Transportband 1050 in einer Transportebene unterhalb der Applikationswalze erstreckt, werden die Kartennutzen unter der Applikationswalze hindurchgeführt und gelangen dabei mit dieser in Kontakt, sodass der von der Applikationswalze gehaltene Hologrammnutzen auf das Kartenformat 121 eines passierenden Karten-Einfachnutzens oder ein erstes Kartenformat des passierenden Streifens übertragen werden kann. Der nachfolgende vereinzelte Hologrammnutzen wird von der Applikationswalze in der gleichen Weise übernommen und gelangt auf den nachfolgenden Karten-Einfachnutzen bzw. auf den Streifen, in diesem Falle auf das dem ersten Kartenformat nachfolgende zweite Kartenformat. Hierbei kommen die Hologrammnutzen jeweils mit der Haftvermittlerschicht auf den Kartenformaten 121 in Kontakt, die dort zuvor aufgetragen wurde.

Damit das Hologramm 111 passergenau auf das Kartenformat 121 aufgestapelt werden kann, werden die Position des Hologrammnutzens 110 mittels der Applikationswalze 1200 und/oder die Position des Kartennutzens 120 auf dem Transportband 1050 korrigiert. Zu diesem Zweck wird beispielsweise die Referenzmarke 112 auf dem Hologrammnutzen, der sich auf der Applikationswalze befindet, durch eine Leseeinrichtung 1070 abgefragt. Des Weiteren kann durch die weitere Leseeinrichtung 1060 die Referenzmarke 122 des jeweiligen Kartennutzens abgefragt werden, um im Anschluss daran den Kartennutzen und den Hologrammnutzen in X- und Y-Richtung aufeinander anzupassen. Zur Positionskorrektur des Hologrammnutzens auf der Applikationswalze kann diese parallel zur Transportrichtung T und/oder senkrecht dazu (und parallel zum Transportband 1050) bewegt werden und/oder um eine Achse senkrecht zur Transportebene für die Kartennutzen gedreht werden. Zusätzlich oder alternativ dazu kann auch die Position des Kartennutzens auf dem Transportband korrigiert werden. Eine solche Anpassung kann beispielsweise durch die Ansteuerung von Vakuumsaugern oder durch Verschiebung von Querachsen, die für den Längstransport erforderlich sind, erfolgen. Die Positionierung in der Transportrichtung kann auch durch einen Wechsel des Transportbandes erreicht werden, wenn das System aus mehreren Transportbändern besteht, die sich in diesem Fall in ihren Geschwindigkeiten unterscheiden können.

Beim Zusammenführen und passergenauen Aufstapeln des Hologrammnutzens 110 auf den Kartennutzen 120 fixiert der Haftvermittler ersteren auf dem Kartennutzen. Falls diese Fixierung jedoch nicht ausreichend sein sollte, um die passergenaue Stapelung beider Verbindungspartner bis zur endgültigen flächigen Verbindung beibehalten zu können, können diese auch mittels separater mechanischer Fixiermittel, beispielsweise Klemmleisten, die mit dem Sandwich auf dem Transportband 1050 mitfahren, miteinander fixiert werden (nicht dargestellt).

Da die Funktionslage 115.2 der Hologrammnutzen 110 nach dem Abziehen der Schutzfolie 115.3 offen liegt, besteht die Gefahr, dass diese durch Verunreinigungen oder Beschädigungen beeinträchtigt wird. Daher ist ferner eine Kapselungseinrichtung 1700, vorzugsweise eine Reinraumkammer, vorgesehen, die den Abschnitt der Transportbahn für das Funktionsmaterial 115 umschließt, der von dem Ort, an dem die Schutzfolie abgetrennt wird, bis zum Zusammenführen des Hologrammnutzens mit dem und passergenauen Stapeln auf den Kartennutzen 120 reicht. Diese Einrichtung kann aus einem einfachen Gehäuse gebildet sein, das den Zutritt von Verschmutzungen weitgehend ausschließt oder ferner auch einen durch forcierten Zutritt von gereinigter Luft oder anderen gereinigten Gasen in dieses Gehäuse erzeugten Reinraum bildet.

Der Applikationswalze 1200 in der Transportrichtung T nachgeschaltet ist eine Kaschiereinrichtung 1500, in der der Hologrammnutzen 110 auf den Kartennutzen 120 aufgedrückt und dabei oder anschließend flächig mit diesem verbunden wird, sodass ein unlösbarer Verbund entsteht. Hierzu dient eine Kaschierwalze 1510, die den Hologrammnutzen auf den Kartennutzen aufdrückt und dabei den sich dazwischen befindenden Haftvermittler flächig verteilt. Falls der auf den Kartennutzen aufgetragene Haftvermittler ein UV-vernetzbares Klebemittel ist, wird das aus dem Hologrammnutzen und dem Kartennutzen gebildete Sandwich dann oder währenddessen mit einem UV-Strahler 1520 bestrahlt, sodass das Klebemittel aushärtet. Andernfalls wird beispielsweise Wärme zugeführt, um die flächige Verbindung herzustellen.

Im Falle von UV-Klebemitteln ist bekannt, dass viele UV-Systeme die holographische Funktionslage 115.2 derart angreifen können, dass sie die Wahrnehmung der Hologramme verändern, indem beispielsweise die Rekonstruktionswellenlänge und/oder der Rekonstruktionswinkel verändert werden. Diese Veränderung ist jedoch bei maschinenprüfbaren Merkmalen hinderlich, bei denen beispielsweise die Präzision einer holographischen Rekonstruktion bezüglich ihrer Beugungswinkel überprüft wird. Sofern die Veränderung so gering wie möglich gehalten werden soll, muss die Zeit der UV-Belichtung entsprechend minimiert werden. Hierzu wird auf die Erläuterungen in dem in DE 10 2009 007 552 A1 gegebenen Beispiel verwiesen. Bei bestimmten UV-Klebesystemen ist es auch möglich, die UV-Vernetzung bereits vor dem Kaschiervorgang zu beginnen. Im Fall einer Beschichtung der Kartennutzen 120 würde also die UV-Lampe 1520 schon vor der Kaschierstation 1500 platziert werden. Das Kaschieren folgt dann auf den Auftrag des Klebers, dessen Vernetzungsreaktion bereits gestartet wurde.

Anstelle von UV-Klebemitteln können die anderen erwähnten Haftvermittler verwendet werden. Insbesondere beheizte Walzen können bei thermischen Haftvermittlern eingesetzt werden. Es können auch Mischformen von Haftvermittlern vorgesehen sein, die beispielsweise sowohl eine UV-vernetzende als auch eine thermische Komponente aufweisen. In einem solchen Fall kann das Sandwich zunächst UV-vorverklebt und unmittelbar danach oder zeitlich getrennt in einer Heizstrecke nachvernetzt werden.

Anschließend wird die Trägerlage 115.1, die die Oberseite des Funktionsmaterials 115 bildet, abgezogen. Hierzu ist der Hologrammnutzen 110 so auf den Kartennutzen 120 aufgebracht worden, dass er randseitig um 1 bis 2 mm über diesen übersteht. Dadurch kann die Trägerlage gegriffen und abgezogen werden. Die hierfür verwendete Einrichtung ist nicht dargestellt.

Im Anschluss daran wird eine Heizstation durchlaufen.

Nachfolgend wird der Nutzenverbund in einer Stanz- oder Schneidstation 1900 in das Endformate der Karte 10 vereinzelt. Die erhaltenen Karten werden in einem Speicher 1950 übereinander gestapelt. Aufgrund der Anordnung der Kartenformate 121 auf dem Kartennutzen 120 wird ermöglicht, dass die Hologrammnutzen 110 mit einem Übermaß zum Kartennutzen auf diese aufkaschiert werden können, so dass durch eine nachfolgende Ausstanzung zur Karte ein sauberer Rand erzeugt wird.

### Bezugszeichenliste:

- 10: Wert- oder Sicherheitsdokument, Karte
- 11: Sicherheitselement, (Volumen)Hologramm
- 12: polymere Basislage
- 110: Sicherheitsmaterial-Einfach- oder Mehrfachnutzen, Hologramm-(Einfach)nutzen
- 111: Sicherheitselemente-Nutzen, Hologramm
- 112: Referenzmarke
- 115: Bahnmaterial, mehrschichtiges Funktionsmaterial
- 115.1: Trägerlage, Trägerfolie
- 115.2: lichtempfindliche Photopolymerlage, lichtempfindliche Funktionslage
- 115.3: Schutzlage, Schutzfolie
- 116: führender Rand
- 120: polymerer Basismaterial-Einfach- oder Mehrfachnutzen, holographischer (Einfach-)-Nutzen, Karten-(Einfach)nutzen, Streifen
- 121: polymerer Basislagen-Nutzen, Kartenformat
- 122: Referenzmarke, Passermarke
- 130: (erste) Rolle des Bahnmaterials
- 131: zweite Rolle des Bahnmaterials
- 1000: Herstellvorrichtung
- 1050: Transportband
- 1060: Leseeinrichtung
- 1070: Leseeinrichtung
- 1100: zweite Beschickungseinrichtung
- 1110: Spleißeinrichtung
- 1120: Schutzfolienrolle
- 1200: Positionierungs- und Stapelungseinrichtung, Applikationswalze
- 1300: erste Beschickungseinrichtung
- 1400: Erzeugungseinrichtung, Bearbeitungseinrichtung, Belichtungs- und Prozessierstation
- 1410: Belichtungsstation
- 1420: Prozessierstation
- 1500: Kaschiereinrichtung
- 1510: Kaschierwalze
- 1520: UV-Strahler
- 1600: Abtrenneinrichtung, Schneidvorrichtung
- 1700: Kapselungseinrichtung
- 1800: Auftragseinrichtung
- 1900: Stanz- oder Schneidstation
- 1950: Speicher
- R: Beförderungsrichtung
- T: Transportrichtung

## Patentansprüche

1. Verfahren zum Herstellen eines mehrlagigen Wert- oder Sicherheitsdokuments (10), das zumindest durch eine polymere Basislage (12) und ein darauf aufkaschiertes Sicherheitselement (11) gebildet ist, umfassend die folgenden Verfahrensschritte:
(a) Bereitstellen von polymerem Basismaterial in Form von polymere Basislagen-Nutzen (121) aufweisenden polymeren Basismaterial-Einfach- oder Mehrfachnutzen (120);
(b) Bereitstellen eines zur Erzeugung einer Vielzahl von Sicherheitselemente-Nutzen (111) vorgesehenen Bahnmaterials (115) im Rollenformat;
(c) Erzeugen der Sicherheitselemente-Nutzen (111) auf und/oder in dem Bahnmaterial (115);
(d) Zusammenführen und Stapeln jeweils eines polymeren Basismaterial-Einfach-oder Mehrfachnutzens (120) und von Sicherheitselemente-Nutzen (111) aufeinander, sodass jeweils ein polymerer Basislagen-Nutzen (121) und ein Sicherheitselemente-Nutzen (111) passergenau aufeinander liegen; und
(e) flächiges Verbinden der jeweiligen polymeren Basislagen-Nutzen (121) und der Sicherheitselemente-Nutzen (111) miteinander,
**dadurch gekennzeichnet, dass** Sicherheitsmaterial-Einfach- oder Mehrfachnutzen (110), die einen oder mehrere Sicherheitselemente-Nutzen (111) aufweisen, aus dem im Rollenformat vorliegenden Bahnmaterial (115) auf den Verfahrensschritt (c) folgend vereinzelt werden und dass danach die Sicherheitsmaterial-Einfach- oder Mehrfachnutzen (110) in den Verfahrensschritten (d) und (e) verarbeitet werden.

2. Verfahren zum Herstellen eines mehrlagigen Wert- oder Sicherheitsdokuments (10) nach Anspruch 1, **dadurch gekennzeichnet, dass** die Sicherheitselemente (11) durch beugungsoptische Elemente gebildet werden und das zur Erzeugung der Sicherheitselemente-Nutzen (111) vorgesehene Bahnmaterial (115) durch ein mehrschichtiges eine Trägerlage (115.1), eine lichtempfindliche Funktionslage (115.2) und eine Schutzlage (115.3) aufweisendes Funktionsmaterial gebildet wird und dass die Nutzen der beugungsoptischen Elemente durch Belichten und Prozessieren in dem mehrschichtigen Funktionsmaterial erzeugt werden.

3. Verfahren zum Herstellen eines mehrlagigen Wert- oder Sicherheitsdokuments (10) nach Anspruch 2, **dadurch gekennzeichnet, dass** die Schutzlage (115.3) des belichteten und prozessierten mehrschichtigen Funktionsmaterials nach dem Belichten und Prozessieren von der lichtempfindlichen Funktionslage (115.2) abgezogen wird, bevor die Sicherheitsmaterial-Einfach- oder Mehrfachnutzen (110) mit den beugungsoptischen Elemente-Nutzen durch Vereinzeln aus dem im Rollenformat vorliegenden Bahnmaterial (115) gebildet werden.

4. Verfahren zum Herstellen eines mehrlagigen Wert- oder Sicherheitsdokuments (10) nach einem der vorstehenden Ansprüche, **dadurch gekennzeichnet, dass** das im Rollenformat vorliegende Bahnmaterial (115) von einer Applikationswalze (1200) gefasst, dann jeweils ein Sicherheitsmaterial-Einfach- oder Mehrfachnutzen (110) durch Abtrennen eines von der Applikationswalze (1200) gefassten Rollenmaterialabschnittes von dem Bahnmaterial (115) gebildet wird und die Sicherheitsmaterial-Einfach- oder Mehrfachnutzen (110) mittels der Applikationswalze (1200) mit den polymeren Basismaterial-Einfach- oder Mehrfachnutzen (120) zusammengeführt und auf diese gestapelt werden.

5. Verfahren zum Herstellen eines mehrlagigen Wert- oder Sicherheitsdokuments (10) nach einem der vorstehenden Ansprüche, **dadurch gekennzeichnet, dass** die Sicherheitsmaterial-Einfach- oder Mehrfachnutzen (110) nach dem Vereinzeln aus dem im Rollenformat vorliegenden Bahnmaterial (115) ohne Zwischenspeicherung gemäß den Verfahrensschritten (d) und (e) weiterverarbeitet werden.

6. Verfahren zum Herstellen eines mehrlagigen Wert- oder Sicherheitsdokuments (10) nach einem der vorstehenden Ansprüche, **dadurch gekennzeichnet, dass** die polymeren Basismaterial-Einfach- oder Mehrfachnutzen (120) und die Sicherheitsmaterial-Einfach-oder Mehrfachnutzen (110) jeweils mittels eines Haftvermittlers flächig miteinander verbunden werden.

7. Verfahren zum Herstellen eines mehrlagigen Wert- oder Sicherheitsdokuments (10) nach einem der vorstehenden Ansprüche, **dadurch gekennzeichnet, dass** die Sicherheitsmaterial-Einfach- oder Mehrfachnutzen (110) durch Vereinzeln im Überformat erzeugt werden.

8. Verfahren zum Herstellen eines mehrlagigen Wert- oder Sicherheitsdokuments (10) nach einem der vorstehenden Ansprüche, **dadurch gekennzeichnet, dass** ein Ende einer ersten Rolle (130) des im Rollenformat vorliegenden Bahnmaterials (115) vor dem Erzeugen der Sicherheitselemente-Nutzen (111) mit einem Ende einer zweiten Rolle (131) des im Rollenformat vorliegenden Bahnmaterials (115) durch Spleißen lagenweise verbunden wird.

9. Vorrichtung zum Herstellen (1000) eines mehrlagigen Wert- oder Sicherheitsdokuments (10), das zumindest durch eine polymere Basislage (12) und ein darauf aufkaschiertes Sicherheitselement (11) gebildet ist, umfassend:
(i) eine erste Beschickungseinrichtung (1300) zum Bereitstellen von polymeren Basismaterial-Einfach- oder Mehrfachnutzen (120);
(ii) eine zweite Beschickungseinrichtung (1100) zum Bereitstellen von im Rollenformat vorliegendem Bahnmaterial (115) zur Herstellung einer Vielzahl von Sicherheitselemente-Nutzen (111);
(iii) eine der zweiten Beschickungseinrichtung (1100) nachgeschaltete Erzeugungseinrichtung (1400) zum Bearbeiten des Bahnmaterials (115) zur Bildung der Sicherheitselemente-Nutzen (111) in und/oder auf dem Bahnmaterial (115);
(iv) eine der ersten Beschickungseinrichtung (1300) und der Erzeugungseinrichtung (1400) nachgeschaltete Positionierungs- und Stapelungseinrichtung (1200) zum Zusammenführen und Stapeln jeweils eines polymeren Basismaterial-Einfach-oder Mehrfachnutzens (120) und von Sicherheitselemente-Nutzen (111) aufeinander, sodass jeweils ein polymerer Basislagen-Nutzen (121) und ein Sicherheitselemente-Nutzen (111) passergenau aufeinander liegen; und
(v) eine der Positionierungs- und Stapelungseinrichtung (1200) nachgeschaltete Kaschiereinrichtung (1500) zum jeweiligen flächigen Verbinden der polymeren Basislagen-Nutzen (121) und der Sicherheitselemente-Nutzen (111) miteinander,
**dadurch gekennzeichnet, dass** die Herstellvorrichtung (1000) ferner eine der Erzeugungseinrichtung (1400) nachgeschaltete und der Positionierungs- und Stapelungseinrichtung (1200) vorgeschaltete Abtrenneinrichtung (1600) zum Vereinzeln von Sicherheitsmaterial-Einfach- oder Mehrfachnutzen (110) aus dem im Rollenformat vorliegenden Bahnmaterial (115) aufweist.

10. Vorrichtung zum Herstellen (1000) eines mehrlagigen Wert- oder Sicherheitsdokuments (10) nach Anspruch 9, **dadurch gekennzeichnet, dass** die Sicherheitselemente (11) durch beugungsoptische Elemente gebildet sind und das zur Erzeugung der Sicherheitselemente-Nutzen (111) vorgesehene Bahnmaterial (115) durch ein mehrschichtiges eine Trägerlage (115.1), eine lichtempfindliche Funktionslage (115.2) und eine Schutzlage (115.3) aufweisendes Funktionsmaterial gebildet ist und dass die Erzeugungseinrichtung (1400) durch eine Bearbeitungseinrichtung zum Belichten und Prozessieren des mehrschichtigen Funktionsmaterials zur Bildung der Nutzen der beugungsoptischen Elemente in dem mehrschichtigen Funktionsmaterial ausgebildet ist.

11. Vorrichtung zum Herstellen (1000) eines mehrlagigen Wert- oder Sicherheitsdokuments (10) nach einem der Ansprüche 9 und 10, **dadurch gekennzeichnet, dass** die Herstellvorrichtung (1000) ferner eine der Erzeugungseinrichtung (1400) nachgeschaltete und der Abtrenneinrichtung (1600) vorgeschaltete Abzieheinrichtung zum Entfernen der Schutzlage (115.3) des belichteten und prozessierten mehrschichtigen Funktionsmaterials von der lichtempfindlichen Funktionslage (115.2) aufweist.

12. Vorrichtung zum Herstellen (1000) eines mehrlagigen Wert- oder Sicherheitsdokuments (10) nach einem der Ansprüche 9 bis 11, **dadurch gekennzeichnet, dass** die Herstellvorrichtung (1000) ferner eine Kapselungseinrichtung (1700) zum Schützen des in der Abtrenneinrichtung (1600) und der Positionierungs- und Stapelungseinrichtung (1200) verarbeiteten Bahnmaterials (115) und der Sicherheitsmaterial-Einfach- oder Mehrfachnutzen (110) aufweist.

13. Vorrichtung zum Herstellen (1000) eines mehrlagigen Wert- oder Sicherheitsdokuments (10) nach einem der Ansprüche 9 bis 12, **dadurch gekennzeichnet, dass** die Positionierungs- und Stapelungseinrichtung (1200) eine Applikationswalze aufweist, die dazu ausgebildet ist, das Bahnmaterial (115) der Sicherheitselemente-Nutzen (111) zu fassen und die Sicherheitsmaterial-Einfach- oder Mehrfachnutzen (110) nach dem Abtrennen eines Bahnmaterialabschnittes von dem Bahnmaterial (115) mit den polymeren Basismaterial-Einfach- oder Mehrfachnutzen (120) zusammenzuführen und auf diese zu stapeln.

14. Vorrichtung zum Herstellen (1000) eines mehrlagigen Wert- oder Sicherheitsdokuments (10) nach einem der Ansprüche 9 bis 13, **dadurch gekennzeichnet, dass** die Herstellvorrichtung (1000) ferner eine der ersten Beschickungseinrichtung (1300) nachgeschaltete und der Positionierungs- und Stapelungseinrichtung (1200) vorgeschaltete Auftragseinrichtung (1800) zum Aufbringen eines Haftvermittlers auf eine Oberfläche der polymeren Basismaterial-Einfach- oder Mehrfachnutzen (120) aufweist.

15. Vorrichtung zum Herstellen (1000) eines mehrlagigen Wert- oder Sicherheitsdokuments (10) nach einem der Ansprüche 9 bis 14, **dadurch gekennzeichnet, dass** die Herstellvorrichtung (1000) ferner eine ein Ende einer ersten Rolle (130) des im Rollenformat vorliegenden Bahnmaterials (115) mit einem Ende einer zweiten Rolle (131) des im Rollenformat vorliegenden Bahnmaterials (115) lagenweise verbindende Spleißeinrichtung (1110) aufweist, die Bestandteil der zweiten Beschickungseinrichtung (1100) ist.

## Claims

1. Method for producing a multilayer value or security document (10), which is formed at least by a polymer base layer (12) and a security element (11) laminated thereon, comprising the following method steps:
(a) providing a polymer base material in the form of polymer base material single or multiple panels (120) which have polymer base layer panels (121);
(b) providing a web material (115), which is provided for producing a plurality of security element panels (111), in a rolled format;
(c) producing the security element panels (111) on and/or in the web material (115);
(d) combining and stacking each polymer base material single or multiple panel (120) and each security element panel (111) one on top of the other, such that in each case a polymer base layer panel (121) and a security element panel (111) lie one on top of the other in a precisely aligned manner; and
(e) connecting together the surfaces of each polymer base layer panel (121) and of the security element panel (111),
**characterised in that** security material single or multiple panels (110) which exhibit one or more security element panels (111) are separated from the web material (115) present in roll format, following on from method step (c), and that, after this, the security material single or multiple panels (110) are processed in the method steps (d) and (e).

2. Method for producing a multi-layered value or security document (10) according to claim 1, **characterised in that** the security elements (11) are formed by diffraction optical elements, and the web material (115) provided in order to produce the security element panels (111) is formed by a multilayered function material, which comprises a carrier layer (115.1), a light-sensitive function layer (115.2), and a protective layer (115.3), and that the panels of the diffraction optical elements are produced by exposing and processing in the multilayered function material.

3. Method for producing a multi-layered value or security document (10) according to claim 2, **characterised in that** the protective layer (115.3) of the exposed and processed multilayered function layer (115.2) is drawn off before the security element single or multiple panels (110) with the diffraction optical element panels are formed by separating out of the web material (115) present in the rolled format.

4. Method for producing a multi-layered value or security document (10) according to any one of the preceding claims, **characterised in that** the web material (115) provided in the rolled format is taken up by an application roller (1200), then in each case a security material single or multiple panel (110) is formed by separating off a section of rolled material taken up by the application roller (1200) from the web material (115), and the security material single or multiple panels (110) are brought by means of the application roller (1200) together with the polymer base material single or multiple panels (120) and stacked on them.

5. Method for producing a multi-layered value or security document (10) according to any one of the preceding claims, **characterised in that** the security material single or multiple panels (110), after the separation of the web material (115) present in the rolled format, undergo further processing without intermediate storage, in accordance with the method steps (d) and (e).

6. Method for producing a multi-layered value or security document (10) according to any one of the preceding claims, **characterised in that** the polymer base material single or multiple panels (120) and the security material single or multiple panels (110) are in each case connected surface to surface to one another by means of an adhesive agent.

7. Method for producing a multi-layered value or security document (10) according to any one of the preceding claims, **characterised in that** the security material single or multiple panels (110) are produced by separating in oversize format.

8. Method for producing a multi-layered value or security document (10) according to any one of the preceding claims, **characterised in that**, before the production of the security element panels (111), one end of a first roll (130) of the web material (115) provided in the rolled format is connected layer by layer, by splicing, to an end of a second roll (131) of the web material (115) present in the rolled format.

9. Device for producing (1000) a multilayered value or security document (10), which is formed by at least one polymer base layer (12) and a security element (11) laminated thereon, comprising:
(i) a first loading device (1300) for providing polymer base material single or multiple panels (120);
(ii) a second loading device (1100) for providing web material (115) which is provided in the rolled format, for producing a plurality of security element panels (111);
(iii) a fabrication device (1400), arranged downstream of the second loading device (1100), for processing the web material (115) for the forming of the security element panels (111) in and/or on the web material (115);
(iv) a positioning and stacking device (1200) downstream of the first loading device (1300) and the fabrication device (1400) for collecting and stacking in each case of a polymer base material single or multiple panel (120) and of security element panels (111) on top of one another, such that in each case a polymer base layer panel (121) and a security element panel (111) lie one on top of the other in a precisely aligned manner; and
(v) a laminating device (1500) downstream of the positioning and stacking device (1200) for the surface to surface connecting in each case of the polymer base layer panels (121) and of the security element panels (111),
**characterised in that** the production device (1000) further comprises a separation device (1600), downstream of the device (1400) and upstream of the positioning and stacking device (1200), for the separating of security material single or multiple panels (110) out of the web material (115) present in the rolled format.

10. Device for producing (1000) a multilayered value or security document (10) according to claim 9, **characterised in that** the security elements (11) are formed by diffraction optical elements, and the web material (115) provided for producing the security element panels (111) is formed by a multilayered function material, comprising a carrier layer (115.1), a light-sensitive function layer (115.2), and a protective layer (115.3), and that the fabrication device (1400) is formed by a processing device for exposing and processing the multilayered function material in order to form the panels of the diffraction optical elements in the multilayered function material.

11. Device for producing (1000) a multilayered value or security document (10) according to any one of claims 9 and 10, **characterised in that** the manufacturing device (1000) further comprises a drawing-off device, downstream of the fabrication device (1400) and upstream of the separation device (1600), for removing the protective layer (115.3) of the exposed and processed function material from the multilayered function material (115.2).

12. Device for producing (1000) a multilayered value or security document (10) according to any one of claims 9 to 11, **characterised in that** the production device (1000) further comprises an encapsulating device (1700) for protecting the web material (115) processed in the separation device (1600) and in the positioning and stacking device (1200) and protecting the security material single or multiple panels (110).

13. Device for producing (1000) a multilayered value or security document (10) according to any one of claims 9 to 12, **characterised in that** the positioning and stacking device (1200) comprises an application roller, which is configured such as to take up the web material (115) of the single or multiple panels (111), and to bring together the security material single or multiple panels (110), after the separation of a web material section from the web material (115), with the polymer base material single or multiple panels (120), and stack them on these panels.

14. Device for producing (1000) a multilayered value or security document (10) according to any one of claims 9 to 13, **characterised in that** the production device (1000) further comprises a first application device (1800), downstream of the first loading device (1300) and upstream of the positioning and stacking device (1200), for applying an adhesive agent onto a surface of the polymer base material single or multiple panels (120).

15. Device for producing (1000) a multilayered value or security document (10) according to any one of claims 9 to 14, **characterised in that** the production device (1000) further comprises a splicing device (1110), which is a constituent part of the second loading device (1100), and which connects, layer by layer, an end of a first roll (130) of the web material (115), provided in the rolled format, with an end of a second roll (131) of the web material (115) provided in the rolled format.

## Revendications

1. Procédé de fabrication d'un document de valeur ou de sécurité (10) à plusieurs couches qui est formé au moins par une couche de base polymère (12) et un élément de sécurité (11) stratifié sur celle-ci, comprenant les étapes de procédé suivantes :
(a) la fourniture d'un matériau de base polymère sous la forme d'exemplaires simples ou multiples de matériau de base polymère (120) présentant des exemplaires de couche de base polymère (121) ;
(b) la fourniture d'un matériau de bande (115) prévu pour la génération d'une pluralité d'exemplaires d'élément de sécurité (111) au format rouleau ;
(c) la génération des exemplaires d'élément de sécurité (111) sur et/ou dans le matériau de bande (115) ;
(d) le regroupement et l'empilement respectivement d'un exemplaire simple ou multiple de matériau de base polymère (120) et d'exemplaires d'élément de sécurité (111) les uns sur les autres de sorte que respectivement un exemplaire de couche de base polymère (121) et un exemplaire d'élément de sécurité (111) se trouvent exactement l'un sur l'autre ; et
(e) la liaison à plat des exemplaires de couche de base polymère (121) respectifs et des exemplaires d'élément de sécurité (111) entre eux,
**caractérisé en ce que** des exemplaires simples ou multiples de matériau de sécurité (110), qui présentent un ou plusieurs exemplaires d'élément de sécurité (111), sont séparés du matériau de bande (115) se présentant au format rouleau suivant l'étape de procédé (c) et qu'ensuite les exemplaires simples ou multiples de matériau de sécurité (110) sont traités aux étapes de procédé (d) et (e).

2. Procédé de fabrication d'un document de valeur ou de sécurité (10) à plusieurs couches selon la revendication 1, **caractérisé en ce que** les éléments de sécurité (11) sont formés par des éléments de diffraction optique et le matériau de bande (115) prévu pour la génération des exemplaires d'élément de sécurité (111) est formé par un matériau fonctionnel à plusieurs couches présentant une couche porteuse (115.1), une couche fonctionnelle sensible à la lumière (115.2) et une couche de protection (115.3) et que les exemplaires des éléments de diffraction optique sont générés par exposition et traitement dans le matériau fonctionnel à plusieurs couches.

3. Procédé de fabrication d'un document de valeur ou de sécurité (10) à plusieurs couches selon la revendication 2, **caractérisé en ce que** la couche de protection (115.3) du matériau fonctionnel à plusieurs couches exposé et traité est retirée après l'exposition et le traitement de la couche fonctionnelle sensible à la lumière (115.2) avant que les exemplaires simples ou multiples de matériau de sécurité (110) ne soient formés avec les exemplaires d'éléments de diffraction optique par séparation du matériau de bande (115) se présentant au format rouleau.

4. Procédé de fabrication d'un document de valeur ou de sécurité (10) à plusieurs couches selon l'une quelconque des revendications précédentes, **caractérisé en ce que** le matériau de bande (115) se présentant au format rouleau est pris par un rouleau d'application (1200), puis respectivement un exemplaire simple ou multiple de matériau de sécurité (110) est formé par séparation d'une section de matériau de rouleau prise par le rouleau d'application (1200) du matériau de bande (115) et les exemplaires simples ou multiples de matériau de sécurité (110) sont regroupés au moyen du rouleau d'application (1200) avec les exemplaires simples ou multiples de matériau de base polymère (120) et sont empilés sur ceux-ci.

5. Procédé de fabrication d'un document de valeur ou de sécurité (10) à plusieurs couches selon l'une quelconque des revendications précédentes, **caractérisé en ce que** les exemplaires simples ou multiples de matériau de sécurité (110) sont retraités après la séparation du matériau de bande (115) se présentant au format rouleau sans entreposage selon les étapes de procédé (d) et (e).

6. Procédé de fabrication d'un document de valeur ou de sécurité (10) à plusieurs couches selon l'une quelconque des revendications précédentes, **caractérisé en ce que** les exemplaires simples ou multiples de matériau de base polymère (120) et les exemplaires simples ou multiples de matériau de sécurité (110) sont reliés entre eux à plat respectivement au moyen d'un agent adhérent.

7. Procédé de fabrication d'un document de valeur ou de sécurité (10) à plusieurs couches selon l'une quelconque des revendications précédentes, **caractérisé en ce que** les exemplaires simples ou multiples de matériau de sécurité (110) sont générés par séparation au surformat.

8. Procédé de fabrication d'un document de valeur ou de sécurité (10) à plusieurs couches selon l'une quelconque des revendications précédentes, **caractérisé en ce qu'**une extrémité d'un premier rouleau (130) du matériau de bande (115) se présentant au format rouleau est reliée, avant la génération des exemplaires d'élément de sécurité (111), à une extrémité d'un second rouleau (131) du matériau de bande (115) se présentant au format rouleau par épissage par couche.

9. Dispositif de fabrication (1000) d'un document de valeur ou de sécurité (10) à plusieurs couches qui est formé au moins par une couche de base polymère (12) et un élément de sécurité (11) stratifié sur celle-ci, comprenant :
(i) un premier dispositif de chargement (1300) pour la fourniture d'exemplaires simples ou multiples de matériau de base polymère (120) ;
(ii) un second dispositif de chargement (1100) pour la fourniture d'un matériau de bande (115) se présentant au format rouleau pour la fabrication d'une pluralité d'exemplaires d'élément de sécurité (111) ;
(iii) un dispositif de génération (1400) monté en aval du second dispositif de chargement (1100) pour le traitement du matériau de bande (115) pour la formation des exemplaires d'élément de sécurité (111) dans et/ou sur le matériau de bande (115) ;
(iv) un dispositif de positionnement et d'empilement (1200) monté en aval du premier dispositif de chargement (1300) et du dispositif de génération (1400) pour le regroupement et l'empilement respectivement d'un exemplaire simple ou multiple de matériau de base polymère (120) et d'exemplaires d'élément de sécurité (111) l'un sur l'autre de sorte que respectivement un exemplaire de couche de base polymère (121) et un exemplaire d'élément de sécurité (111) se trouvent exactement l'un sur l'autre ; et
(v) un dispositif stratifié (1500) monté en aval du dispositif de positionnement et d'empilement (1200) pour la liaison à plat respective des exemplaires de couche de base polymère (121) et des exemplaires d'élément de sécurité (111) entre eux,
**caractérisé en ce que** le dispositif de fabrication (1000) présente en outre un dispositif de séparation (1600) monté en aval du dispositif de génération (1400) et monté en amont du dispositif de positionnement et d'empilement (1200) pour la séparation d'exemplaires simples ou multiples de matériau de sécurité (110) du matériau de bande (115) se présentant au format rouleau.

10. Dispositif de fabrication (1000) d'un document de valeur ou de sécurité (10) à plusieurs couches selon la revendication 9, **caractérisé en ce que** les éléments de sécurité (11) sont formés par des éléments de diffraction optique et le matériau de bande (115) prévu pour la génération des exemplaires d'élément de sécurité (111) est formé par un matériau fonctionnel à plusieurs couches présentant une couche porteuse (115.1), une couche fonctionnelle sensible à la lumière (115.2) et une couche de protection (115.3) et que le dispositif de génération (1400) est réalisé par un dispositif de traitement pour l'exposition et le traitement du matériau fonctionnel à plusieurs couches pour la formation des exemplaires des éléments de diffraction optique dans le matériau fonctionnel à plusieurs couches.

11. Dispositif de fabrication (1000) d'un document de valeur ou de sécurité (10) à plusieurs couches selon l'une quelconque des revendications 9 et 10, **caractérisé en ce que** le dispositif de fabrication (1000) présente en outre un dispositif de retrait monté en aval du dispositif de génération (1400) et monté en amont du dispositif de séparation (1600) pour le retrait de la couche de protection (115.3) du matériau fonctionnel à plusieurs couches exposé et traité de la couche fonctionnelle sensible à la lumière (115.2).

12. Dispositif de fabrication (1000) d'un document de valeur ou de sécurité (10) à plusieurs couches selon l'une quelconque des revendications 9 à 11, **caractérisé en ce que** le dispositif de fabrication (1000) présente en outre un dispositif de capsulage (1700) pour la protection du matériau de bande (115) traité dans le dispositif de séparation (1600) et le dispositif de positionnement et d'empilement (1200) et des exemplaires simples ou multiples de matériau de sécurité (110).

13. Dispositif de fabrication (1000) d'un document de valeur ou de sécurité (10) à plusieurs couches selon l'une quelconque des revendications 9 à 12, **caractérisé en ce que** le dispositif de positionnement et d'empilement (1200) présente un rouleau d'application qui est réalisé afin de prendre le matériau de bande (115) des exemplaires d'élément de sécurité (111) et de regrouper les exemplaires simples ou multiples de matériau de sécurité (110) après la séparation d'une section de matériau de bande du matériau de bande (115) avec les exemplaires simples ou multiples de matériau de base polymère (120) et de les empiler sur ceux-ci.

14. Dispositif de fabrication (1000) d'un document de valeur ou de sécurité (10) à plusieurs couches selon l'une quelconque des revendications 9 à 13, **caractérisé en ce que** le dispositif de fabrication (1000) présente en outre un dispositif d'application (1800) monté en aval du premier dispositif de chargement (1300) et monté en amont du dispositif de positionnement et d'empilement (1200) pour l'application d'un agent adhérent sur une surface des exemplaires simples ou multiples de matériau de base polymère (120).

15. Dispositif de fabrication (1000) d'un document de valeur ou de sécurité (10) à plusieurs couches selon l'une quelconque des revendications 9 à 14, **caractérisé en ce que** le dispositif de fabrication (1000) présente en outre un dispositif d'épissure (1110), reliant par couche une extrémité d'un premier rouleau (130) du matériau de bande (115) se présentant au format rouleau à une extrémité d'un second rouleau (131) du matériau de bande (115) se présentant au format rouleau, qui fait partie du second dispositif de chargement (1100).
